# EUROPEAN PATENT APPLICATION

(11) **EP 4 679 418 A1**
(43) Date of publication of application: **14.01.2026**
(21) Application number: 25154398.9
(22) Date of filing: 28.01.2025
(51) Int. Cl.: G10L 15/22, G06F 3/16, G10L 15/30

(54) **VOICE PROCESSING METHOD, APPARATUS, DEVICE, STORAGE MEDIUM AND PRODUCT**

(30) Priority: 11.07.2024 CN 202410931149
(71) Applicant: Beijing Zitiao Network Technology Co., Ltd., Beijing 100190 (CN)
(72) Inventor: HAN, Zhimin, Bejing 100028 (CN); XU, Meng, Beijing 100028 (CN)
(74) Representative: Marks & Clerk LLP

(57) **Abstract**

Embodiments of the present disclosure provide a voice processing method and apparatus, a device, a storage medium and a product. The method comprises: receiving, in response to being in a connected state with the second terminal, a first voice signal sent by a second terminal, the first voice signal referring to a voice signal obtained by the second terminal by collecting a voice emitted by a target user; obtaining a second voice signal corresponding to the first voice signal through a voice interaction model, the second voice signal referring to a voice signal generated by a feedback text corresponding to a recognized text of the first voice signal; sending the second voice signal to the second terminal, the second voice signal being played by the second terminal. The second terminal completes the collection of the voice emitted by the target user, so that the target user needn't concern whether the first terminal can collect a clear voice signal any more. The present disclosure achieves voice interaction and improves the target user's experience without affecting the target user's experience in use.

## Description

### FIELD

Embodiments of the present disclosure relate to the field of computer technologies, and particularly, to a voice processing method, apparatus, a device, a storage medium and a product.

### BACKGROUND

Voice interaction may refer to a target user's interaction with a terminal device via a voice, and the terminal device acquires feedback content corresponding to a voice signal via a server. Then, the terminal device may play the information fed back by the server. For example, the target user sends a question "what about today's weather", and the terminal device may play a "weather forecast" fed back by the server.

However, conventional modes and scenarios of voice interaction are generally limited to the direct interaction between the target user and the terminal device, and the usage mode is relatively limited, which does not facilitate the extended application of the terminal device, and causes the target user's poor experience.

### SUMMARY

Embodiments of the present disclosure provide a voice processing method and apparatus, a device, a computer-readable storage medium and a product, for solving the technical problem of high complexity and difficulty in processing instant messaging tasks.

In a first aspect, an embodiment of the present disclosure provides a voice processing method applied to a first terminal, comprising:
receiving a first voice signal sent by a second terminal when in a connected state with the second terminal, the first voice signal referring to a voice signal obtained by the second terminal by collecting a voice emitted by a target user;
obtaining a second voice signal corresponding to the first voice signal through a voice interaction model, the second voice signal referring to a voice signal generated by a feedback text corresponding to a recognized text of the first voice signal;
sending the second voice signal to the second terminal, the second voice signal being played by the second terminal.

In a second aspect, an embodiment of the present disclosure provides a voice processing method applied to a second terminal, comprising:
collecting a target user's voice signal to obtain a first voice signal;
in a case of being in a connected state with a first terminal, sending the first voice signal to the first terminal, the first terminal acquiring a second voice signal corresponding to the first voice signal, the second voice signal referring to a voice signal corresponding to a feedback text corresponding to a recognized text of the first voice signal;
receiving the second voice signal sent by the second terminal and playing the second voice signal.

In a third aspect, an embodiment of the present disclosure provides a voice processing apparatus located at a first terminal, comprising:
a receiving unit configured to receive a first voice signal sent by a second terminal when in a connected state with the second terminal, the first voice signal referring to a voice signal obtained by the second terminal by collecting a voice emitted by a target user;
an obtaining unit configured to obtain a second voice signal corresponding to the first voice signal through a voice interaction model, the second voice signal referring to a voice signal generated by a feedback text corresponding to a recognized text of the first voice signal;
a sending unit configured to send the second voice signal to the second terminal, the second voice signal being played by the second terminal.

In a fourth aspect, an embodiment of the present disclosure provides a voice processing apparatus located at a second terminal, the apparatus comprising:
a collection unit configured to collect a voice signal formed by a voice emitted by a target user to obtain a first voice signal;
a sending unit configured to, in response to being in a connected state with a first terminal, send the first voice signal to the first terminal, the first terminal acquiring a second voice signal corresponding to the first voice signal, the second voice signal referring to a voice signal corresponding to a feedback text corresponding to a recognized text of the first voice signal;
a receiving unit configured to receive the second voice signal sent by the second terminal and play the second voice signal.

In a fifth aspect, an embodiment of the present disclosure provides an electronic device comprising: a processor and a memory;
the memory stores computer-executable instructions;
the processor executes the computer-executable instructions stored in the memory to cause the at least one processor to perform the voice processing method in the above first aspect and various possible designs of the first aspect.

In a sixth aspect, an embodiment of the present disclosure provides a computer-readable storage medium having stored therein computer-executable instructions that, when executed by a processor, implement the voice processing method in the above first aspect and various possible designs of the first aspect.

In a seventh aspect, an embodiment of the present disclosure provides a computer program product comprising a computer program which, when executed by a processor, implement the voice processing method in the above first aspect and various possible designs of the first aspect.

According to the voice processing method and apparatus, the device, the storage medium and the product, the first terminal may, in a state connected with the second terminal, receive the first voice signal sent by the second terminal, the first voice signal referring to a voice signal obtained by the second terminal by collecting a voice sent by the target user. The second terminal completes the collection of the voice emitted by the target user, so that the target user needn't concern whether the first terminal can collect a clear voice signal any more. Then, the second voice signal corresponding to the first voice signal is obtained through the voice interaction model, to achieve separation of voice signal collection from voice signal processing. In addition, the first terminal also sends the second voice signal to the second terminal, so that the second terminal plays the second voice signal and completes the playing of the feedback content. In this process, the target user's experience in use is the same as the interaction effect resulting from direct use of the first terminal. The process achieves voice interaction and improves the target user's experience without affecting the target user's experience in use.

### BRIEF DESCRIPTION OF THE DRAWINGS

In order to illustrate embodiments of the present disclosure or technical solutions in the prior art more clearly, a brief introduction will be given below to accompanying drawings to be used in describing the embodiments or the prior art; it is obvious that the drawings in the following depictions illustrate some embodiments of the present disclosure, and those having ordinary skill in the art may also obtain other drawings according to these drawings without making any inventive efforts.
FIG. 1 illustrates an example diagram of an application scenario of a voice processing method according to an embodiment of the present disclosure;
FIG. 2 illustrates a flow chart of a voice processing method according to an embodiment of the present disclosure;
FIG. 3 illustrates an example diagram of application of a voice interaction system according to an embodiment of the present disclosure;
FIG. 4 illustrates an example diagram of a voice processing method according to an embodiment of the present disclosure;
FIG. 5 illustrates another flow chart of a voice processing method according to an embodiment of the present disclosure;
FIG. 6 illustrates an example diagram of detection of a sending operation mode according to an embodiment of the present disclosure;
FIG. 7 illustrates an example diagram of wakeup of a first application according to an embodiment of the present disclosure;
FIG. 8 illustrates an example diagram of human-machine interaction according to an embodiment of the present disclosure;
FIG. 9 illustrates a flow chart of a voice processing method according to an embodiment of the present disclosure;
FIG. 10 illustrates an example diagram of collection of a sound source signal according to an embodiment of the present disclosure;
FIG. 11 illustrates a schematic diagram of a voice processing apparatus according to an embodiment of the present disclosure;
FIG. 12 illustrates another schematic diagram of a voice processing apparatus according to an embodiment of the present disclosure;
FIG. 13 illustrates a schematic diagram of an electronic device according to an embodiment of the present disclosure.

### DETAILED DESCRIPTION OF EMBODIMENTS

To make objectives, technical solutions and advantages of embodiments of the present disclosure more apparent, the technical solutions in embodiments of the present disclosure will be described clearly and completely with reference to figures in embodiments of the present disclosure. Obviously, the embodiments described herein are partial embodiments rather than all embodiments of the present disclosure. Based on the embodiments in the present disclosure, all other embodiments obtained by those having ordinary skill in the art without making any inventive efforts fall within the extent of protection of the present disclosure.

It may be appreciated that before the technical solutions disclosed in the embodiments of the present disclosure are used, a target user should be informed of the type, usage scope, usage scenario, etc. of his personal information involved in the present disclosure in an appropriate manner according to relevant laws and regulations, and authorization should be obtained from the target user.

For example, prompt information is sent to the target user in response to receiving the target user's active request to explicitly prompt the target user that the operation he requests to perform will require obtaining and using the target user's personal information. Accordingly, the target user is enabled to, according to the prompt information, autonomously select whether to provide the personal information to software or hardware, such as an electronic device, an application, a server or a storage medium, which performs operations of the technical solution of the present disclosure.

As an alternative but non-limiting implementation, a manner of sending the prompt information to the target user in response to receiving the target user's active request may for example be a pop-up window in which the prompt information may be presented in text. In addition, the pop-up window may also carry a selection control for the target user to select "agree" or "disagree" to provide the personal information to the electronic device.

It may be appreciated that the above process of notifying and obtaining the target user's authorization is merely illustrative and not intended to limit implementations of the present disclosure, and that other manners satisfying relevant laws and regulations may also be applied to implementations of the present disclosure.

In order to solve the technical problem that instant messaging tasks have a high complexity with a large processing difficulty, the present disclosure provides a voice processing method and apparatus, a device, a computer-readable storage medium and a product.

It needs to be appreciated that the voice processing method and apparatus, the device, the storage medium and the product according to the present disclosure may be applied to any task configuration scenario of instant messaging.

In the related art, a target user may use a terminal device such as a mobile phone to realize human-computer interaction. For example, the terminal device may collect the target user's voice signal, and acquire feedback content corresponding to the voice signal via a server. Thus, the terminal device may play the content fed back by the server. However, a conventional interaction scenario is generally a direct interaction between the target user and the terminal device, and the usage mode is relatively limited.

In practical application, when the target user is far away from the terminal device, it is difficult to implement the interaction with the terminal device. That is to say, the conventional mode of direct interaction between the target user and the terminal device is not applicable to an application scenario where the target user is far away from the terminal device. Once the target user is far away from the terminal device, language interaction is difficult. In addition, even if the terminal device is portable, direct manual operation by the target user is currently required; once the user's hands are occupied by other work or it is inconvenient to directly manually operate the terminal device, the user cannot interact with the terminal device.

In order to solve the above problem, thoughts are given to using a device worn by the target user to perform data transmission with the terminal, i.e., collection and sending of a voice signal are completed via the device worn by the target user. The terminal device may receive the voice signal sent by the device worn by the target user and perform a corresponding feedback process.

Accordingly, in the technical solution of the present disclosure, a first terminal, in a state connected with a second terminal, may receive a first voice signal sent by the second terminal, wherein the first voice signal refers to a voice signal obtained by the second terminal by collecting a voice emitted by the target user. The second terminal completes the collection of the voice emitted by the target user, so that the target user does not need to concern whether the first terminal can collect a clear voice signal. Then, a second voice signal corresponding to the first voice signal is obtained through a voice interaction model, to achieve separation of voice signal collection from voice signal processing. In addition, the first terminal also sends the second voice signal to the second terminal, so that the second terminal plays the second voice signal and completes the playing of the feedback content. In this process, the target user's experience in use is the same as the interaction effect resulting from direct use of the first terminal. The process achieves voice interaction and improves the target user's experience without affecting the target user's experience in use.

Hereinafter, a voice processing method according to an embodiment of the present disclosure will be described in detail with reference to the figures.

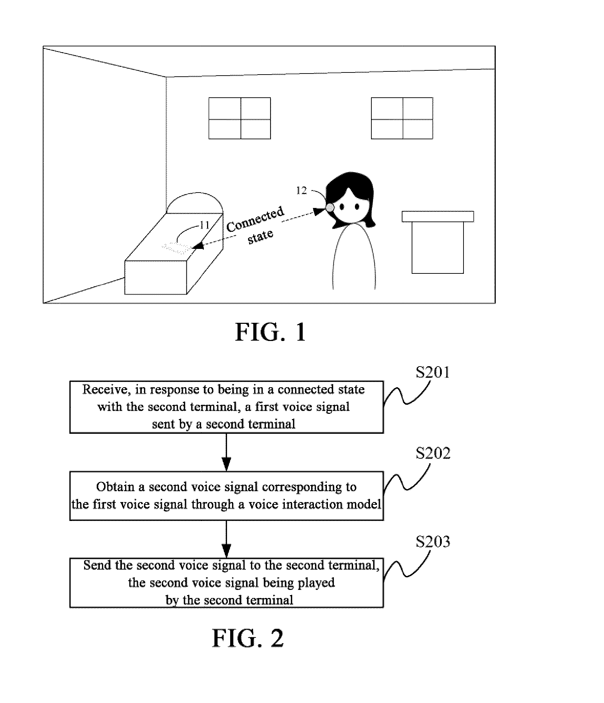

FIG. 1 illustrates an example diagram of an application scenario of a voice processing method according to an embodiment of the present disclosure. As shown in FIG. 1, a first terminal 11 may be a mobile phone used daily by a target user, and a second terminal 12 may be a headset worn by the target user. The first terminal 11 and the second terminal 12 may be in a connected state. The connected state may mean that a communication link between the first terminal 11 and the second terminal 12 remains connected.

On this basis, the first terminal 11 may be carried by or placed at a position at a distance from the target user. As shown in FIG. 1, the first terminal 11 may be located at a first position, e.g., the first position may be near a bed in a room, and the target user may be located at a second position, e.g., the second position may be near a desk in the room.

When the target user emits a voice, the second terminal 12 may collect a voice signal from the voice emitted by the target user to obtain a first voice signal, and then sends the first voice signal to the first terminal 11 in a case where the second terminal 12 and the first terminal 11 are in the connected state.

In the state connected with the second terminal 12, the first terminal 11 may receive the first voice signal sent by the second terminal 12. Thereafter, the first terminal 12 may obtain a second voice signal corresponding to the first voice signal through a voice interaction model, the second voice signal refers to a voice signal generated by a feedback text corresponding to a recognized text of the first voice signal.

After obtaining the second voice signal, the first terminal may also send the second voice signal to the second terminal to cause the second terminal to play the second voice signal.

FIG. 2 illustrates a flow chart of a voice processing method according to an embodiment of the present disclosure. The method may be applied to a first terminal, and the voice processing method may comprise the following steps:
S201: in a connected state with a second terminal, the first terminal receives a first voice signal sent by the second terminal, wherein the first voice signal refers to a voice signal obtained by the second terminal by collecting a voice sent by a target user.

Optionally, the first terminal and the second terminal may establish a communication link. The connected state of the first terminal and the second terminal may mean that the communication link between the first terminal and the second terminal is not interrupted.

Exemplarily, the first terminal and the second terminal may establish a wireless communication connection, for example. The wireless communication for example may refer to any wireless communication technology among WiFi (Wireless Fidelity), Bluetooth, 4G (4 generation) mobile communication technology, 5G mobile communication technology, etc.

Further, the first terminal may detect a communication state with the second terminal. The communication state may include a connected state or a disconnected state. Whether the first terminal is in the connected state with the second terminal is determined by the communication state.

The first terminal may be configured with a first application. In step 201, receiving the first voice signal sent by the second terminal may refer to receiving the first voice signal sent by the second terminal through the first application.

It may be appreciated that the first application may be an application configured at the first terminal. The first application may be used for receiving, forwarding and processing the voice signal.

Optionally, the second terminal may collect a voice emitted by the target user, obtain a first voice signal, and send the first voice signal to the first terminal.

It may also be appreciated that the collection manner of the second terminal may be configured by the first terminal. For example, the first terminal may configure parameters such as the voice and signal type, of the voice signal collected by the second terminal. The second terminal may perform audio signal collection according to the collection parameters to realize standardized audio collection.

In some embodiments, the second terminal comprises a wearable device, and the first terminal comprises a mobile terminal.

The wearable device comprises at least one of a headset, smart glasses, a smart watch or smart bracelets. The mobile terminal comprises at least one of a mobile phone, a notebook computer, or a tablet computer.

In a possible design, the first terminal may establish a one-to-one communication connection with the second terminal such that a data path between the first terminal and the second terminal is normally used.

In yet another possible design, the first terminal may establish a one-to-many communication connection with a plurality of second terminals to provide more interaction manners for the user.

S202: obtaining a second voice signal corresponding to the first voice signal through a voice interaction model, the second voice signal referring to a voice signal generated by a feedback text corresponding to a recognized text of the first voice signal.

Optionally, the voice interaction model may be a large Artificial Intelligence (Al) model obtained by training and having a voice processing function, for example, one or more of AI models such as a Large Language Model (LLM), natural language processing, a voice recognition model, a voice conversion model, and the like.

It may be appreciated that the voice interaction model may be configured in the first terminal. At this time, performing step 202 by the first terminal may refer to inputting the first voice signal into the voice interaction model to obtain the feedback text corresponding to the recognized text. The feedback text is converted into a voice signal through the voice interaction model to obtain the second voice signal.

S203: sending the second voice signal to the second terminal, the second voice signal being played by the second terminal.

Optionally, step 203 may comprise: sending an audio stream of the second voice signal to the second terminal. The second terminal may receive the audio stream of the second voice signal and play the audio stream of the second voice signal.

Optionally, step 203 may further comprise: converting the second voice signal into a voice data packet according to a communication protocol with the second terminal, and sending the voice data packet to the second terminal.

Furthermore, the second terminal may receive the second voice signal sent by the first terminal and play the second voice signal.

In the embodiment of the present disclosure, the first terminal may receive the first voice signal sent by the second terminal when the first terminal is in the connected state with the second terminal, the first voice signal referring to the voice signal obtained by the second terminal by collecting the voice sent by a target user. The second terminal completes the collection of the voice emitted by the target user, so that the target user does not need to pay attention to whether the first terminal can collect a clear voice signal. Then, the second voice signal corresponding to the first voice signal is obtained through the voice interaction model, thereby achieving the separation of the voice signal collection and voice signal processing. In addition, the first terminal also sends the second voice signal to the second terminal, so that the second terminal plays the second voice signal and completes the playing of the feedback content. In this process, the target user's experience in use is the same as the interaction effect resulting from direct use of the first terminal. The process achieves voice interaction and improves the target user's experience without affecting the target user's experience in use. In addition, since the user wears the wearable device, the user may complete the interaction using the voice interaction model on the mobile terminal anytime and anywhere without taking out and manually operating the mobile terminal, thereby improving the convenience in using the voice interaction model.

In the embodiment shown in FIG. 2, the voice interaction model is configured in the first terminal such that voice processing of the first voice signal may be performed by the first terminal. In addition, the voice processing of the first voice signal may be performed by a server.

In some embodiments, the obtaining a second voice signal corresponding to the first voice signal through a voice interaction model comprises:

sending the first voice signal to the server, the voice interaction model being configured in the server, the voice interaction model being configured to obtain a feedback text corresponding to a recognized text of the first voice signal;
obtaining a second voice signal corresponding to the feedback text.

Optionally, the sending the first voice signal to the server may refer to sending the first voice signal to the server through the first application.

The voice interaction model may be configured in the server. The server may also be used to input the first voice signal into the voice interaction model and to obtain the feedback text output by the voice interaction model.

The feedback text may refer to a text corresponding to an intent of the recognized text. For example, the recognized text is "please recommend a restaurant", and the feedback text for example may be "restaurant S, 500 meters away from you, scores very high; recommend you have a try".

Optionally, the obtaining a second voice signal corresponding to the feedback text may comprise converting the feedback text to a voice signal to obtain the second voice signal. That is, the first terminal converts the feedback text into a voice signal.

In the embodiment of the present disclosure, the first terminal may send the first voice signal to the server, and perform text recognition on the first voice signal via the voice interaction model configured in the server to obtain the recognized text, so as to obtain the feedback text corresponding to the recognized text. The use of the server to complete voice signal recognition may reduce the processing pressure of the first terminal, thereby improving the processing efficiency of the first terminal, providing a more efficient voice interaction service and improving the target user's experience.

In some embodiments, the obtaining a second voice signal corresponding to the feedback text may comprise:
receiving second voice information sent by the server, the voice interaction model being further used for converting the feedback text into the second voice signal.

Optionally, the server may convert the feedback text into the second voice signal.

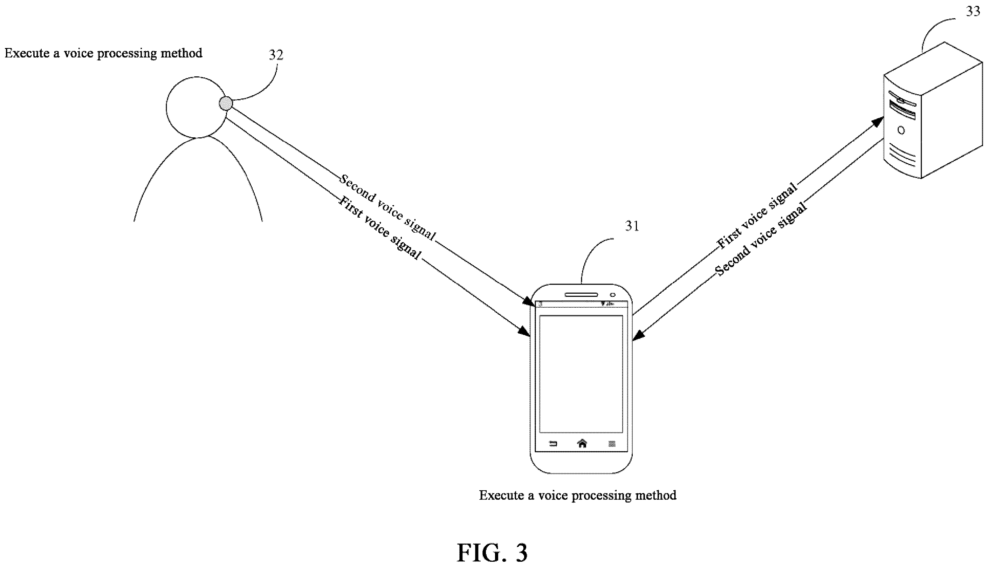

FIG. 3 illustrates an example diagram of application of a voice interaction system according to an embodiment of the present disclosure. As shown in FIG. 3, the system may include: a first terminal 31, a second terminal 32 and a server 33. The first terminal 31 for example may be a mobile phone, and the second terminal 32 for example may be a headset.

Wherein, the first terminal 31 and the second terminal 32 are in a connected state, for example, the mobile phone and the headset are connected via Bluetooth. A possible application scenario of the voice interaction system is exemplified below.

The second terminal 32 may collect a first voice signal and send the first voice signal to the first terminal 31. The first terminal 31 may send the first voice signal to the server 33. A voice interaction model such as LLM may be configured in the server 33, and meanwhile the voice interaction model also supports a text-to-audio sound generation task. Therefore, the server 33 may perform text recognition through the LLM, obtain a recognized text, and then obtain corresponding feedback contents through task processing such as text intention recognition. The feedback content may be, for example, a feedback text, and then the voice interaction model generates voice from the feedback text by means of a sound generation task, to obtain a second voice signal. The server 33 may then send the second voice signal to the first application of the first terminal 31. The first application then forwards the second voice signal to the second terminal 32.

In the embodiments of the present disclosure, the first terminal may receive the second voice information sent by the server, and the second voice information may be obtained by converting the feedback text by the voice interaction model. Achieving the recognition and conversion of the voice and text by the voice interaction model may achieve the smooth operation from voice recognition to voice conversion, effectively improve the voice processing efficiency, complete the acquisition of the second language information more quickly and conveniently, and then complete the voice playing more quickly and conveniently.

In some embodiments, obtaining the second voice signal corresponding to the feedback text comprises:
receiving a playback instruction sent by the server, the playback instruction referring to an instruction for starting a second application associated with the recognized text of the first voice signal and playing relevant multimedia content;
executing the playback instruction to start the second application and control the second application to play the relevant multimedia content;
determining a voice signal when the relevant multimedia content is played, as the second voice signal.

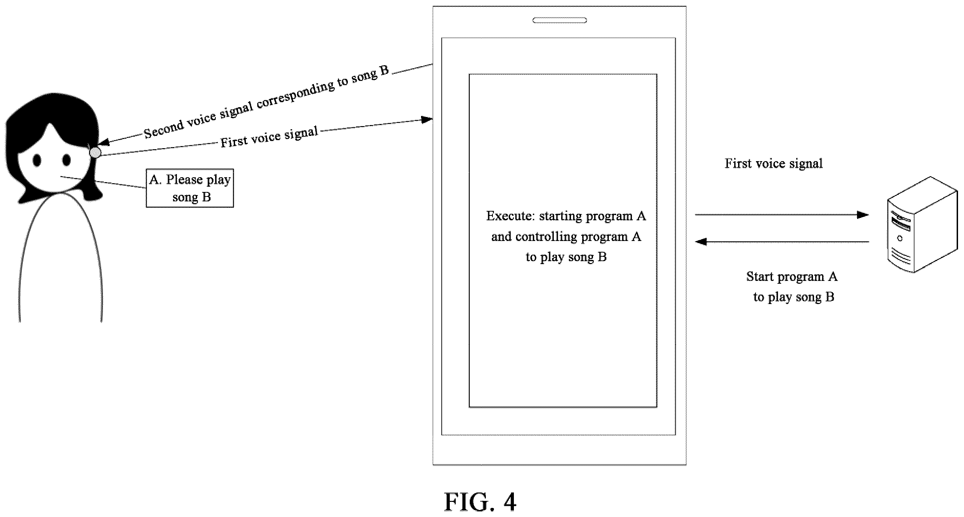

FIG. 4 illustrates an example diagram of a voice processing method according to an embodiment of the present disclosure. As shown in FIG. 4, the target user may wear a second terminal. The first terminal may be a mobile phone. Further, the first terminal may be connected to a server.

The target user may emit a voice such as "Program A, please play song B". The second terminal may collect the voice to obtain a first voice signal. The second terminal may send the first voice signal to the first terminal. The first terminal sends the first voice signal to the server. A voice interaction model, such as an LLM, may be configured in the server, and the voice interaction model may recognize a text in the first voice signal, perform intention recognition, and determine that the target user needs to start program A, and play song B. Then, the voice interaction model in the server may also generate a playback instruction "start program A and play song B".

The server may then send the playback instruction to the first terminal. The first terminal may then execute the playback instruction to start program A and control program A to play song B.

Optionally, the executing the playback instruction to start the second application and control the second application to play the relevant multimedia content may comprise: running the playback instruction to start the second application. The playback instruction may contain a target keyword of the multimedia content. After the second application is started, a query function of the second application may be invoked to query the multimedia content matching the target keyword so as to control the second application to play the queried multimedia content.

In the embodiment of the present disclosure, the server recognizes the text intention of the first voice signal via the voice interaction model, i.e., starts the second application and play the relevant multimedia content, and then the server generates the playback instruction based on the text intention. The playback instruction is sent by the server to the first terminal, and the first terminal executes the playback instruction, i.e., may start the second application and control the second application to play the relevant multimedia content. Through the automatic realization of the whole process from the voice recognition to the playback instruction completed by the server, the target user may complete the playing of the multimedia content without performing excessive manual intervention, so that the voice interaction is applicable to richer interaction scenes and improves the target user's experience.

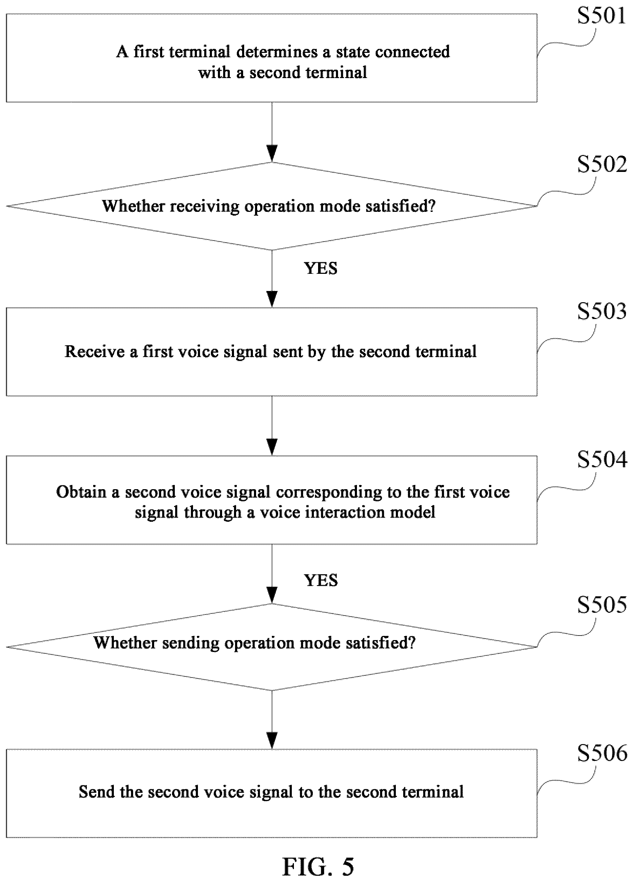

FIG. 5 illustrates another flow chart of a voice processing method according to an embodiment of the present disclosure. The voice processing method is applied in a first terminal, and the voice processing method comprises the following steps:
S501: the first terminal determines that the second terminal is in a connected state.

Some steps in the present embodiment are the same as those in other embodiments and will not be described in detail any more.

S502: determining whether a receiving operation mode is satisfied, and if YES, performing step 503.

Optionally, in a case where the receiving operation mode is not satisfied, the flow may return to step 501 for continued execution.

Optionally, step 502 may comprise: determining whether a stable audio stream is detected, and if YES, determining that the receiving operation mode is satisfied, or if NO, determining that the receiving operation mode is not satisfied.

Furthermore, determining whether a stable audio stream is detected may comprise: acquiring a signal duration in which a continuous audio signal is detected, determining whether the signal duration is greater than a time threshold, and if YES, determining that the stable audio stream is detected, or if NO, determining that the stable audio stream is not detected.

S503: receiving a first voice signal sent by a second terminal.

S504: obtaining a second voice signal corresponding to the first voice signal through a voice interaction model.

S505: determining whether a sending operation mode is satisfied, and if YES, executing step 506.

Optionally, in a case where the sending operation mode is not satisfied, the process returns to step 503 or step 501 for continued execution.

Optionally, determining whether the sending operation mode is satisfied may comprise: determining whether the first voice signal is received, and if YES, determining that the sending operation mode is not satisfied, or if NO, determining that the sending operation mode is satisfied.

S506: sending the second voice signal to the second terminal.

In the embodiments of the present disclosure, two operation modes, i.e., the receiving operation mode and the sending operation mode, are set in the first terminal, so that the first terminal supports operation in any of the receiving operation mode and the sending operation mode, which may avoid the phenomenon of confusion of information processing flows due to the co-existence of two demands, i.e., the voice playing and voice collection, and effectively reduce the failure of voice interaction in the first terminal, thereby improving the overall reliability of the voice interaction.

In some embodiments, in order to determine the operation mode of the first terminal, the voice processing method according to the present disclosure further comprises:
receiving a first audio stream sent by the second terminal, and acquiring a recognized text of the first audio stream via the voice interaction model;
if the recognized text of the first audio stream is a non-complete statement, determining that the receiving operation mode is satisfied, and continuing to receive the next first audio stream sent by the second terminal device;
if the recognized text of the first audio stream is a complete statement, determining that the sending operation mode is satisfied in response to acquiring the second voice signal.

Optionally, the second terminal may send at least one first audio stream. Specifically, at least one first audio stream may be sent sequentially. The first terminal may sequentially receive at least one first frequency stream.

The second terminal may collect the first audio stream; in the process of collecting the first audio stream, the collected audio stream may be preliminarily judged firstly; if the duration of the collected audio stream is less than a second time threshold, the audio stream will be deleted; if the duration of the collected audio stream is greater than or equal to the second time threshold, the collected audio stream is taken as the first audio stream.

Furthermore, if a time interval between two adjacent first audio streams is greater than or equal to an interval threshold, it is determined that the sending operation mode is not satisfied. If the time interval between two adjacent first audio streams is less than the interval threshold, whether the first audio stream is a complete statement needs to be determined.

It may also be appreciated that at least one first audio stream that is continuous in time may be acquired. The acquiring the recognized text of the first audio stream via the voice interaction model may comprise: acquiring at least one first audio stream which is continuous in time, and identifying the recognized text corresponding to the at least one first audio stream through the voice interaction model.

It may also be appreciated that the at least one first audio stream may be an audio stream of a complete first voice signal. Acquiring the recognized text of the first audio stream via the voice interaction model may refer to determining whether a voice file where the first audio stream is located is complete, and if YES, acquiring the recognized text of the voice file where the first audio stream is located, via the voice interaction model.

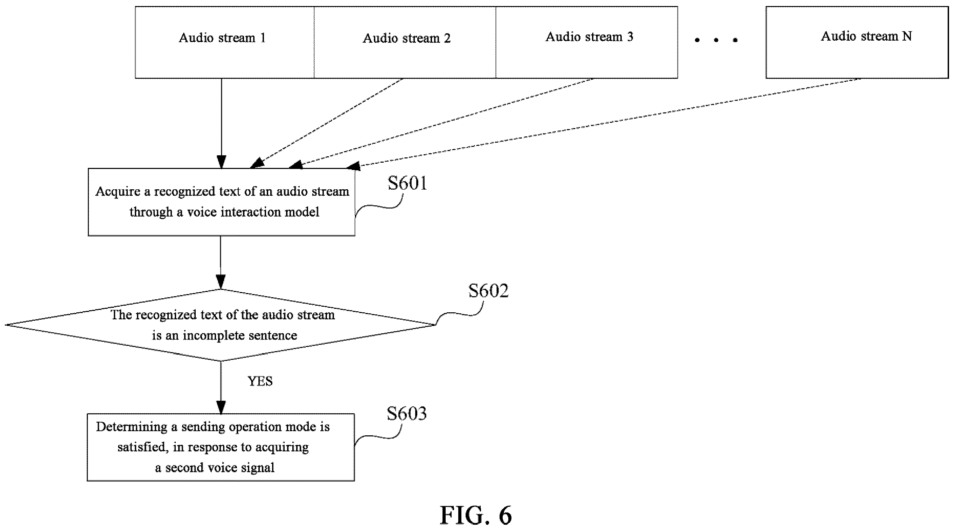

FIG. 6 illustrates an example diagram of inspection of a sending operation mode according to an embodiment of the present disclosure. As shown in FIG. 6, the second terminal continuously collects audio streams, audio stream 1, audio stream 2 and audio stream 3 to audio stream N, respectively. In the audio stream collection process, once an audio stream is collected, step 601 may be performed to identify the recognized text of the audio stream through the voice interaction model, and then step 602 is performed to determine whether the text corresponding to the audio stream is a complete statement.

If YES, determining the sending operation mode is satisfied in response to acquiring the second voice signal is performed in step 603, thereby sending the second voice signal to the second terminal.

If NO, the sending operation mode is not satisfied, and the next first audio stream sent by the second terminal device is then received. For example, audio stream 2 is the next audio stream of audio stream 1. Audio stream 3 is the next audio stream of audio stream 2. Steps 601 to 603 are performed when the audio stream 1 is acquired, and steps 601 to 603 are performed again when the audio stream 2 is acquired, to achieve the detection of a complete statement of each audio stream, thereby achieving the start and detection of the sending operation mode.

In the present embodiment, the determining the sending operation mode is satisfied in response to acquiring the second voice signal refers to determining the sending operation mode is satisfied upon receiving the second voice signal. Then, the sending of the second voice signal may be started. That is, receiving the second voice signal is a premise of starting the sending operation mode, which may avoid an invalid start and waste of resources caused by starting the sending mode upon not receiving the second voice signal.

In the embodiment of the present disclosure, the determination of whether in the sending operation mode may be achieved by determining whether the first audio stream sent to the second terminal is a complete statement. That is to say, associating the sending operation mode with standardization of the statement can achieve a more complete and effective detection of voice interaction demands, and improve the accuracy and effectiveness in detecting the sending operation mode.

In some embodiments, the sending the second voice signal to a second terminal comprises:
transmitting a second audio stream of the second voice signal to the second terminal, the second audio stream being received and played by the second terminal in real time;
in the process of transmitting the second audio stream of the second voice signal, if receiving a fourth voice signal sent by the second terminal, determining that the receiving operation mode is satisfied and stopping transmitting the second audio stream of the second voice signal, the fourth voice signal being acquired by collecting in the process of the second terminal receiving and playing the second audio stream of the second voice signal in real time;
taking the fourth voice signal as a new first voice signal.

Alternatively, the user may again initiate a voice interaction during the playing of the audio signal. Therefore, when the user's voice signal is detected, it may be determined that the receiving operation mode is satisfied.

The fourth voice signal may be a new voice signal collected by the second terminal. Therefore, the fourth voice signal may be taken as a new first voice signal to realize real-time collection of the first voice signal.

When the receiving operation mode is satisfied, the sending operation mode is terminated. When the sending operation mode is satisfied, the receiving operation mode is terminated.

In the embodiment of the present disclosure, in the process of the second terminal transmitting the second audio stream of the second voice signal to the first terminal, if the fourth voice signal sent by the second terminal is received, it means that a new voice signal is detected, whereupon the sending of the second audio stream may be stopped and the new voice signal may be processed instead. If a priority level of target user's voice interaction demand is higher, responding to the target user's voice interaction demand with a priority may effectively improve the efficiency in responding to the target user's interaction demand, and thus improve the target user's experience.

In some embodiments, before receiving the first voice signal collected by the second terminal, the method further comprises:
in a case of triggering a preset target start instruction, starting a first application associated with the target start instruction.

Alternatively, the target start instruction may refer to a preset instruction for starting the first application.

It may be appreciated that an association relationship between the target start instruction and the start of the first application may be pre-established such that the start of the first application is achieved when the target start instruction is executed.

Exemplarily, the target start instruction may be associated with a start parameter of a start API (Application Programming Interface) of the first application. When the target start instruction is triggered, the start parameter may be transmitted to the start API of the first application to automatically start the first application through the operation of the start API.

In the embodiment of the present disclosure, before receiving the first voice signal collected by the second terminal, the first terminal may start the first application associated with the target start instruction in the case of triggering the preset target start instruction, to realize the automatic start of the first application and improve the starting efficiency of the first application.

In some embodiments, the target start instruction may be determined as being triggered upon receipt of a wake-up instruction. Therefore, the voice processing method according to the present disclosure may further comprise:
determining that the target start instruction is triggered, in response to receiving the wake-up instruction.

### Alternatively, the wake-up instruction may be sent by the second terminal or by the server.

The wake-up instruction may be acquired in any of the following two modes:
Mode 1: determining that the target start instruction is triggered, in response to receiving the wake-up instruction sent by the second terminal, wherein the wake-up instruction is generated when the second terminal detects a wake-up keyword. The wake-up keyword may be preset in the second terminal. The second terminal has a simple voice recognition model, and thereby detects the keyword of the voice signal through the voice recognition model.
Mode 2: determining that the target start instruction is triggered, in response to receiving the wake-up instruction sent by the server, wherein the wake-up instruction is generated when the server detects the wake-up keyword from the recognized text of a wake-up voice signal collected by the second terminal.

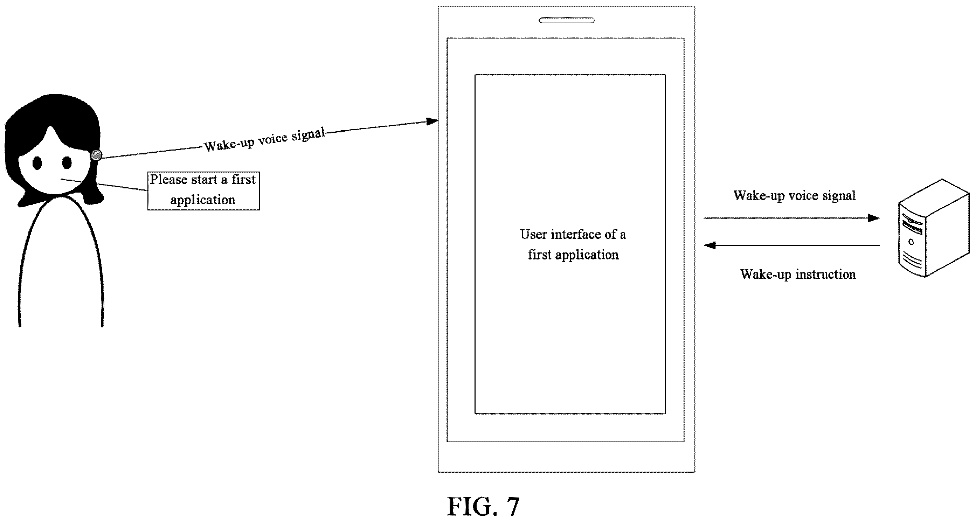

FIG. 7 illustrates an example diagram of wakeup of a first application according to an embodiment of the present disclosure. As shown in FIG. 7, Mode 2 is exemplified by taking a mobile phone as the first terminal and a headset as the second terminal.

When the user wears the headset, the headset may collect a wake-up voice signal sent by the user, such as "please start the first application", and the wake-up voice signal is sent to the mobile phone. The mobile phone sends the wake-up voice signal to the server. The server recognizes an intention of a recognized text in the wake-up voice signal, i.e., "start the first application", and generates the wake-up instruction. The wake-up instruction is sent to the mobile phone. Thus, the handset may execute the wake-up instruction to start the first application. Meanwhile, a user interface of the first application is displayed in the mobile phone screen.

It may be understood that the wake-up voice signal is intended to be different from the first voice signal and the second voice signal in terminology, not in the voice content in the voice signals. The second terminal may directly send each collected voice signal to the first terminal. The recognition of the text and the intention of the voice signal is completed by the first terminal.

Alternatively, the trigger of the target start instruction is determined in response to a triggering operation performed on a first component of the first application in the first user interface.

Optionally, the first user interface may comprise a plurality of components. The first component may be a component of the first application. The first application may refer to an application for receiving or transmitting the voice signal.

In the embodiment of the present disclosure, a target start instruction may be triggered by a wake-up voice signal, and then the first application is started, that is, the automatic start of the first application is achieved without contacting the first terminal. Alternatively, the start of the first application may also be achieved by the target user performing a triggering operation on the first component of the first user interface to ensure the reasonable use and operation of the first application by the target user, and improve the degree of participation of the target user.

In some embodiments, receiving the first voice signal sent by the second terminal comprises:

in a process of displaying a second user interface of a third application, receiving, by the first application, the first voice signal sent by the second terminal.

In the embodiment of the present disclosure, the process of displaying the second user interface of the third application indicates that the target user is using the third application. In this process, the first terminal may still receive the first voice signal sent by the second terminal via the first application, and then perform voice interaction via the voice interaction model to realize the playing of the second voice signal. Allowing the target user to successively use the third application without requiring the target user to terminate the currently-used application achieves the multi-task processing of the first terminal, effectively improves the utilization rate of the overall resource of the first terminal, embodies the function expansion of the first terminal, and improves the target user's experience.

In some embodiments, after responding to the triggering operation performed on a first component in the first user interface, the method further comprises:
triggering display of a third user interface corresponding to the first application;
returning to display the first user interface in response to an interface switching operation performed on the third user interface;
in response to a triggering operation performed on a second component in the first user interface, triggering display of a second user interface corresponding to the second component, the second component referring to a component of the third application.

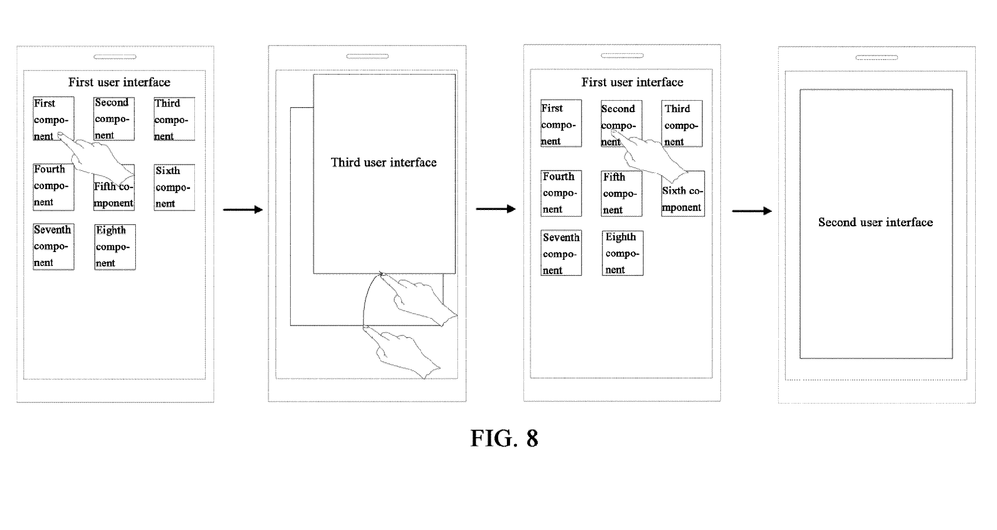

FIG. 8 illustrates an example diagram of human-machine interaction according to an embodiment of the present disclosure. As shown in FIG. 8, a first user interface may comprise a plurality of components such as a first component, a second component, a third component, a fourth component, a fifth component, a sixth component, a seventh component and an eighth component. Certainly, the number and arrangement of the components may be determined according to the target user's settings, and are not limited too much in the present embodiment.

The first terminal may detect a triggering operation that the target user may perform on the first component in the first user interface. The triggering operation may be, for example, a click or a slide. The first terminal may then display a third user interface of the first application in response to the triggering operation.

Further, the first terminal may also detect an interface switching operation performed on the third user interface by the target user, for example, the interface switching operation is a sliding operation performed on the third user interface, for example, the upward sliding operation as shown in FIG. 8. As the sliding operation is performed constantly, the switching from the third user interface to the first user interface is triggered. At this time, although the third user interface is no longer displayed in the screen, the first application can still be run.

Thereafter, the first terminal may also detect a triggering operation performed by the second component in the first user interface, and the first terminal may again trigger the display of the second user interface corresponding to the second component in response to the triggering operation.

In the embodiment of the present disclosure, after the target user performs the triggering operation on the first component in the first user interface, it is possible to trigger the displaying of the third user interface corresponding to the first application, and then in response to the interface switching operation executed on the third user interface, return to display the first user interface, and complete interface switching via the interface switching operation. In addition, it is also possible to trigger the displaying of the second user interface corresponding to the second component of the first user interface in response to the triggering operation performed on the second component, the second component referring to a component of the third application. By triggering to start a new application through the component, the target user may switch between different applications and interfaces thereof, to achieve a seamless switching experience and improve the target user's experience.

In some embodiments, the receiving a first voice signal collected by the second terminal in a case where the first terminal is in a connected state with the second terminal comprises:
obtaining the first voice signal collected by the second terminal in a case where the first terminal is in a lock screen state and in the connected state with the second terminal.

Optionally, the Lock Screen State refers to a state in which a screen of a first terminal, such as a mobile phone or a tablet computer, is locked and the target user needs to unlock to use internal functions and data of the first terminal. The first terminal may enter the lock screen state after a period of time in which no operation is performed.

The first terminal may enter the lock screen state in both a standby state and a sleep mode.

The standby state may mean that the first terminal is in a no-operation state and the screen is in a power-off state, whereupon the power consumption is extremely low. The standby mode in the present disclosure refers to a non-pure standby mode. In the non-pure standby mode, in addition to key processes of the system, there are many applications in the background that occupy the memory so that the applications in the background continue to run.

The sleep mode may refer to a further development of the standby mode. When the first terminal is placed in the standby state for a period of time, the first terminal automatically enters the sleep mode.

In the embodiment of the present disclosure, after the first terminal enters the lock screen state, the first voice signal collected by the second terminal can still be collected, and then the voice processing of the first voice signal and the playing of the corresponding second voice signal are realized. In the case where the target user does not contact the first terminal, only voice is required to realize voice interaction. In this process, the first terminal is still in the lock screen state, which achieves reduction of energy consumption. The whole process does not require the target user to perform additional operations. The voice interaction process is smooth and efficient and improves the target user's overall experience.

In some embodiments, the voice processing method according to the present disclosure may further comprise:
acquiring a third voice signal to be played currently by a multimedia player;
the sending the second voice signal to the second terminal comprises:
sending the second voice signal and the third voice signal to the second terminal, where the second voice signal and the third voice signal are played synchronously by the second terminal.

Optionally, the multimedia player may be an application for playing multimedia content, for example, any type of program such as an audio playback program, a video playback program, a short video playback program, etc.

Optionally, the sending the second voice signal and the third voice signal to the second terminal may comprise: performing audio mixing on the second voice signal and the third voice signal to obtain a target voice signal, and sending the target voice signal to the second terminal.

Further, the performing audio mixing on the second voice signal and the third voice signal may comprise performing audio mixing on the second voice signal and the third voice signal via an audio mixing program or an audio mixing algorithm.

The audio mixing algorithm may be, for example, a time domain mixing algorithm or a frequency domain mixing algorithm. The time domain mixing algorithms superimpose multiple sound sources directly in the time domain, whereas the frequency domain mixing algorithms superimpose sound sources in the frequency domain.

Time domain mixing: this directly superimposes multiple sound sources on a time axis. The time domain mixing is applicable to application scenarios where requirements for audio quality are not particularly high.

Frequency domain mixing: by converting the audio signal from the time domain to the frequency domain for processing, the frequency domain mixing can provide richer audio effects and higher sound quality.

In the embodiment of the present disclosure, besides acquiring the second voice signal through voice interaction, the first terminal may also acquire the third voice signal to be currently played by the multimedia player, so as to send both the third voice signal and the second voice signal to the second terminal, so that the second voice signal and the third voice signal can be played synchronously by the terminal device Synchronously playing the second voice signal and the third voice signal archives mixed voice playing, so that the played content of the voice is richer, and the target user can be provided with richer audio content at the same time, thereby enhancing the interactivity and interest of the voice interaction.

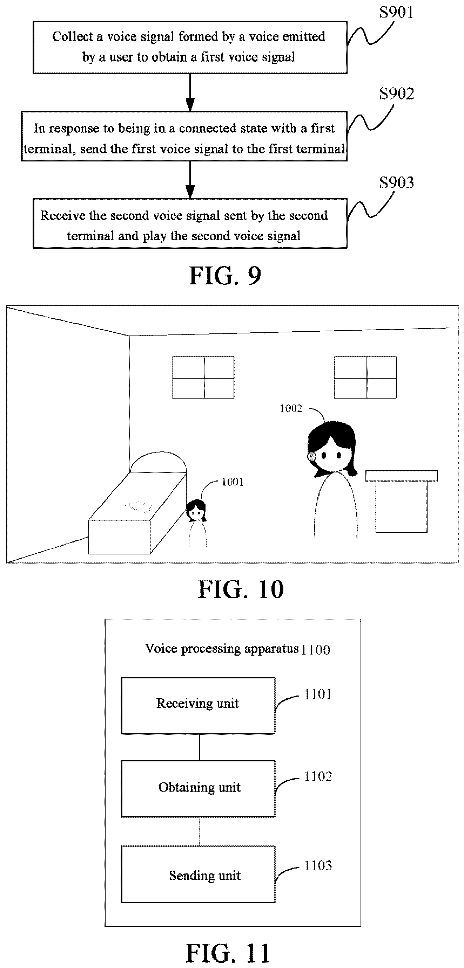

FIG. 9 illustrates a flow chart of a voice processing method according to an embodiment of the present disclosure. The voice processing method may comprise the following steps:
S901: collecting a target user's voice signal to obtain a first voice signal.

It needs to be appreciated that reference may be made to the content executed by the second terminal in the above embodiment for relevant steps in the voice processing method in the embodiment of the present disclosure. Detailed description will not be presented any more here.

S902: in a case of being in a connected state with the first terminal, sending a first voice signal to the first terminal, acquiring, by the first terminal, a second voice signal corresponding to the first voice signal, the second voice signal referring to a voice signal corresponding to a feedback text corresponding to a recognized text of the first voice signal;

S903: receiving the second voice signal sent by the second terminal, and playing the second voice signal.

In the embodiment of the present disclosure, the first terminal may receive the first voice signal sent by the second terminal when the first terminal is in a connected state with the second terminal, the first voice signal referring to a voice signal obtained by the second terminal by collecting a voice emitted by a target user. The second terminal completes the collection of voice from the target user, needless to concern whether the first terminal can collect a clear voice signal. Then, the second voice signal corresponding to the first voice signal is obtained through the voice interaction model, thereby achieving the separation of the voice signal collection and the voice signal processing. In addition, the first terminal also sends the second voice signal to the second terminal, so that the second terminal plays the second voice signal and completes the playing of the feedback content. In this process, the target user's experience in use is the same as the interaction effect resulting from direct use of the first terminal. The process achieves voice interaction and improves the target user's experience without affecting the target user's experience in use.

In some embodiments, the collecting a target user's voice signal to obtain a first voice signal comprises:
collecting a sound source signal;
if the sound source signal satisfies a sound recognition condition, determining the sound source signal as the target user's first voice signal.

The second terminal may collect the signals in real time. FIG. 10 illustrates an example diagram of collection of a sound source signal according to an embodiment of the present disclosure. As shown in FIG. 10, there are two users: a first user 1001 and a second user 1002, respectively. The second user 1002 wears a second terminal. The position of the first user 1001 is different from that of the second user 1002, and a sound source position when the first user 1001 emits the voice is different from that when the second user 1002 emits a voice; therefore, there is a certain difference between the first user 100 I's audio and the second user 1002's audio collected by the second terminal. Therefore, the sound source signal may be determined to be the target user's first voice signal according to whether the sound source signal satisfies a sound recognition condition.

Optionally, collecting the sound source signal may comprise collecting the sound source signal via a microphone. The sound source signal may refer to the second terminal's collection of a sound in an environment where it is located.

In the embodiment of the present disclosure, the second terminal may collect the sound source signal and determine whether the sound source signal satisfies the sound recognition condition, so as to determine that the sound source signal is the first voice signal when the sound recognition condition corresponding to the target user is satisfied. That is to say, using the voice recognition condition to determine whether the sound source signal is the voice signal emitted by the target user may more accurately distinguish the voice emitted by the target user from noise, realize effective and accurate collection of voice signals, avoid the waste of resources caused by collecting invalid voice signals, and thus effectively improve the accuracy and efficiency of the voice interaction.

In some embodiments, whether the sound source signal satisfies the voice recognition condition is determined by the following steps:
determining first direction and position information about the sound source signal, the first direction and position information referring to position information and/or direction information about the sound source of the sound source signal with respect to the second terminal;
if the first direction and position information satisfies a direction and position recognition condition, determining that the sound source signal satisfies the sound recognition condition;
if the first direction and position information does not satisfy the direction and position recognition condition, determining that the sound source signal does not satisfy the sound recognition condition.

Optionally, determining whether the first direction and position information satisfies the direction and position recognition condition may comprise the following steps:
acquiring second direction and position information about the second terminal, the second direction and position information referring to position information and/or direction information about the second terminal.
determining whether the first direction and position information matches the second direction and position information; if YES, determining that the first direction and position information satisfies the direction and position recognition condition; or if NO, determining that the first direction and position information does not satisfy the direction and position recognition condition.

Furthermore, the determining whether the first direction and position information matches the second direction and position information may be achieved by the following steps:
if the position information in the first direction and position information matches the position information in the second direction and position information, or the direction information in the first direction and position information matches the direction information in the second direction and position information, determining that the sound source signal satisfies the sound recognition condition.

Optionally, the determining the position information in the first direction and position information matches the position information in the second direction and position information may comprise: calculating a position distance between the position information in the first direction and position information and the position information in the second direction and position information, and if the position distance is less than a distance threshold, determining that the position information in the first direction and position information matches the position information in the second direction and position information; if the position distance is greater than or equal to the distance threshold, determining that the position information in the first direction and position information matches the position information in the second direction and position information.

Optionally, the determining the direction information in the first direction and position information matches the direction information in the second direction and position information may comprise:: calculating an angle difference between the direction information in the first direction and position information and the direction information in the second direction and position information, and if the angle difference satisfies a preset angle difference threshold, determining that the direction information in the first direction and position information matches the direction information in the second direction and position information; if the angle difference does not satisfy the angle difference threshold, determining that the direction information in the first direction and position information matches the direction information in the second direction and position information.

Furthermore, whether the angle difference satisfies the angle difference threshold may refer to determining whether the angle difference is similar to the angle difference threshold, or whether the angle difference is greater than the angle difference threshold, or whether the angle difference is less than the angle difference threshold. The manner of determining whether the angle difference meets the angle difference threshold is related to the actual wearing mode of the second terminal, and may be specifically set according to actual application, and this is not limited in the present embodiment.

In addition, whether the first direction and position information matches the second direction and position information may also be determined by a direction and position determination model. The direction and position determination model may refer to a machine learning model/a deep learning model that is trained to determine whether the two pieces of direction and position information are similar.

The first direction and position information and the second direction and position information may be input to the direction and position determination model to obtain a determination result, which may include a match or a mismatch.

In the embodiment of the present disclosure, the first direction and position information about the sound source signal is acquired; position matching is performed on the first direction and position information and the second direction and position information about the second terminal; the sound source signal is determined as satisfying the sound recognition condition in the case where the first direction and position information matches the second direction and position information; the sound source signal is determined as not satisfying the sound recognition condition in the case where the first direction and position information does not match the second direction and position information. In the above manner, the determination of the sound source signal is achieved using the sound source, the authenticity of the sound source signal is detected effectively, and the target user's voice signal is collected more effectively.

In some embodiments, whether the sound source signal satisfies the sound recognition condition is determined by the following steps:
acquiring a historical sound signal of the target user;
if the sound source signal matches the historical sound signal, determining that the sound source signal satisfies the sound recognition condition;
if the sound source signal does not match the historical sound signal, determining that the sound source signal does not satisfy the sound recognition condition.

Optionally, the step of discriminating whether the sound source signal matches the historical sound signal may comprise: extracting sound source features of the sound source signal, extracting sound features of the historical sound signal, and calculating similarity between the sound source features and the sound features; if the similarity is greater than or equal to a preset similarity threshold, determining that the sound source signal matches the historical sound signal; if the similarity is less than the preset similarity threshold, determining that the sound source signal does not match the historical sound signal.

The sound source signal and the historical sound signal are both audio signals, and are only different from each other in terminology. The sound source features and sound features all are features of an audio signal, and the different terms are used to distinguish features of different audio signals.

The same feature-extracting manner may be used to extract the sound source features of the sound source signal and extract the sound features of the historical sound signal.

Optionally, the sound source features of the sound source signal and the sound features of the historical sound signal may be separately extracted using a feature extraction algorithm. The feature extraction algorithm may, for example, refer to an algorithm that is capable of extracting features that characterize the user's voice characteristics. The features characterizing the user's voice characteristics may refer to, for example, the user's spectral features (e.g., formants), time domain features (e.g., a rate of speech and a tone change), etc.

In the embodiment of the present disclosure, matching the target user's historical sound information with the sound source information, and determining the sound source from the perspective of the analysis of the audio content may achieve more effective and accurate voice signal acquisition.

In some embodiments, the receiving a second voice signal sent by the second terminal and playing the second voice signal comprise:
receiving a second voice signal and a third voice signal sent by the second terminal;
playing the second voice signal and the third voice signal synchronously.

Optionally, the receiving a second voice signal and a third voice signal sent by the second terminal may comprise: receiving a target voice signal obtained by mixing the second voice signal and the third voice signal. The playing the second voice signal and the third voice signal synchronously may comprise playing the target voice signal mixed with the second voice signal and the third voice signal.

Reference may be made to the depictions of the above embodiments for the manner of synthesizing the target voice signal, which will not be described in detail any more.

In the embodiment of the present disclosure, the second terminal may receive the third voice signal and the second voice signal and synchronously play the second voice signal and the third voice signal. It is possible to, by synchronously playing the second voice signal and the third voice signal, achieve the playing of the mixed voice so that the played content of the voice is richer, and provide richer audio content for a target user at the same time, thereby enhancing the interactivity and interest of the voice interaction.

In some embodiments, the playing the second voice signal and the third voice signal synchronously comprises:
mixing the second voice signal and the third voice signal as a target voice signal according to a sound mixing rule that a volume of the second voice signal is greater than that of the third voice signal;
playing the target voice signal.

Optionally, the mixing the second voice signal and the third voice signal as a target voice signal according to a sound mixing rule that a volume of the second voice signal is greater than that of the third voice signal may comprise: in a process of mixing the second voice signal and the third voice signal, determining a first volume of the second voice signal and a second volume of the third voice signal according to the sound mixing rule that the volume of the second voice signal is greater than that of the third voice signal, wherein the first volume is greater than the second volume; performing audio mixing on the second voice signal at the first volume and the third voice signal at the second volume to obtain the target voice signal.

Regarding a specific implementation of audio mixing, an audio mixing algorithm may be employed to performing audio mixing on the second voice signal at the first volume and the third voice signal at the second volume to obtain the target voice signal. The audio mixing algorithm may for example be a time domain mixing algorithm or a frequency domain mixing algorithm. Reference may be made to the content of relevant embodiments for relevant content, which will not be described in detail any more here.

In the embodiment of the present disclosure, when the second voice signal and the third voice signal are mixed, audio mixing may be achieved according to the rule that the volume of the second voice signal is greater than that of the third voice signal, so that when the second voice signal and the third voice signal are played synchronously, the volume of the second voice signal is higher, and the user can recognize a voice interaction result more quickly and clearly, thereby realizing more effective voice interaction, avoiding the phenomenon that the playback effect of the second voice signal is poor due to audio mixing, and improving the user's experience.

In some embodiments, the method further comprises:
collecting a wake-up instruction initiated by the target user, and sending the wake-up instruction to the first terminal, the wake-up instruction instructs the first terminal to trigger a preset target start instruction, and starting a first application associated with the target start instruction.

In the embodiment of the present disclosure, the target start instruction may be triggered by the wake-up voice signal, and then the first application is started, namely, automatic starting of the first application is achieved without contacting the first terminal. Alternatively, the starting of the first application may also be achieved by the target user performing a triggering operation on the first component of the first user interface to ensure the reasonable use and operation of the first application by the target user, so as to improve the degree of participation of the target user.

In some embodiments, the sending a first voice signal to the first terminal comprises:
converting the first voice signal into a data packet according to a preset target protocol, the target protocol referring to a data protocol preset by the second terminal and the first application of the second terminal;
sending the data packet to the first terminal, the data packet being parsed by the first terminal to obtain a second voice signal.

Optionally, the target protocol may be a private protocol between the first terminal and the second terminal, and the data transmission of the first terminal and the second terminal may be made more secure and efficient by the setting of the target protocol.

Optionally, the converting the first voice signal into a data packet according to a preset target protocol may comprise: converting the first voice signal into the data packet according to header information of the target protocol.

The header information may be, for example, at least one of the following: a time stamp, a sequence number, synchronization information, etc. The setting of the header information may facilitate the first terminal to correctly parse and reconstruct the audio data.

Optionally, if the audio stream of the first voice signal is long, the first voice signal may be divided into a plurality of smaller data packets for transmission. This helps to transmit data more efficiently in the network and reduce data loss caused by network delay or packet loss.

That is, the first voice signal may be segmented into a plurality of data packets. Further, the format and size of each packet may be specified by the target protocol to ensure that each data packet complies with a specification of the protocol.

In the embodiment of the present disclosure, a data protocol, i.e., the target protocol, may be preset in the second terminal and the first application, so that when the first terminal transmits data with the second terminal via the first application, data transmission is performed according to the target protocol. The setting of the target protocol makes the data transmission between the first terminal and the second terminal more secure, and meanwhile reduces unnecessary data traffic transmission, thereby improving the overall performance of the interaction.

FIG. 11 illustrates a schematic diagram of a voice processing apparatus according to an embodiment of the present disclosure. The voice processing apparatus may be located at a first terminal. The voice processing apparatus 1100 may comprise the following units:
a receiving unit 1101 configured to receive a first voice signal sent by a second terminal when in a connected state with the second terminal, the first voice signal referring to a voice signal obtained by the second terminal by collecting a voice emitted by a target user;
an obtaining unit 1102 configured to obtain a second voice signal corresponding to the first voice signal through a voice interaction model, the second voice signal referring to a voice signal generated by a feedback text corresponding to a recognized text of the first voice signal;
a sending unit 1103 configured to send the second voice signal to the second terminal, the second voice signal being played by the second terminal.

In some embodiments, the obtaining unit 1102 may comprise:
a sending module configured to send the first voice signal to a server, the voice interaction model being configured in the server, and the voice interaction model being used for acquiring the feedback text corresponding to the recognized text of the first voice signal;
an acquisition module configured to acquire the second voice signal corresponding to the feedback text.

In some embodiments, the acquisition module comprises:
a first receiving sub-module is configured to receive second voice information sent by the server, the voice interaction model being further used for converting the feedback text into the second voice signal.

In some embodiments, the acquisition module comprises:
a second receiving sub-module configured to receive a playback instruction sent by the server, the playback instruction referring to an instruction for starting a second application associated with the recognized text of the first voice signal and playing relevant multimedia content;
an instruction execution sub-module configured to execute the playback instruction to start the second application and control the second application to play the relevant multimedia content;
a signal determination sub-module configured to determine a voice signal when the relevant multimedia content is played, as the second voice signal.

In some embodiments, the receiving unit 1101 comprises:
a first receiving module configured to receive the first voice signal sent by the second terminal in response to satisfying a receiving operation mode;
the sending unit 1103 comprises:
a first sending module configured to send the second voice signal to the second terminal in response to satisfying a sending operation mode.

In some embodiments, further comprising:
an audio stream receiving unit configured to receive a first audio stream sent by the second terminal and acquire a recognized text of the first audio stream via the voice interaction model;
a processing unit configured to determine that the receiving operation mode is satisfied if the recognized text of the first audio stream is an incomplete statement, and continuing to receive the next first audio stream sent by the second terminal device; if the recognized text of the first audio stream is a complete statement, determining that the sending operation mode is satisfied in response to acquiring the second voice signal.

In some embodiments, the first sending module comprises:
an audio transmission sub-module configured to transmit a second audio stream of the second voice signal to the second terminal, the second audio stream being received and played by the second terminal in real time;
a mode switching sub-module used configured to, in a process of transmitting the second audio stream of the second voice signal, if a fourth voice signal sent by the second terminal is received, determining that the receiving operation mode is satisfied and stopping transmitting the second audio stream of the second voice signal, the fourth voice signal being obtained by collecting in a process of the second terminal receiving and playing the second audio stream of the second voice signal in real time;
a signal update sub-module configured to take the fourth voice signal as a new first voice signal.

In some embodiments, further comprising:
a program starting unit configured to, in a case of triggering a preset target start instruction, start a first application associated with the target start instruction.

In some embodiments, further comprising:
a first start unit configured to determine to trigger the target start instruction in response to receiving a wake-up instruction; or
a second start unit configured to determine to trigger the target start instruction in response to a triggering operation performed on a first component of the first application in a first user interface.

In some embodiments, the receiving unit 1101 comprises:
a display unit configured to receive the first voice signal sent by the second terminal through the first application in a process of displaying the second user interface of a third application.

In some embodiments, further comprising:
a first trigger unit configured to trigger the display of a third user interface corresponding to the first application;
an interface switching unit configured to return to display the first user interface in response to an interface switching operation performed on the third user interface;
a second trigger unit configured to, in response to a triggering operation performed on a second component in the first user interface, trigger the display of a second user interface corresponding to the second component, the second component referring to a component of the third application.

In some embodiments, the receiving unit 1101 comprises:
a lock screen receiving unit configured to obtain the first voice signal collected by the second terminal in a case of being in a lock screen state and being in a connected state with the second terminal.

In some embodiments, further comprising:
a voice acquisition unit configured to acquire a third voice signal to be played currently by a multimedia player;
the sending unit 1103 comprising:
a signal sending module configured to send the second voice signal and the third voice signal to the second terminal, the second voice signal and the third voice signal being played synchronously by the second terminal.

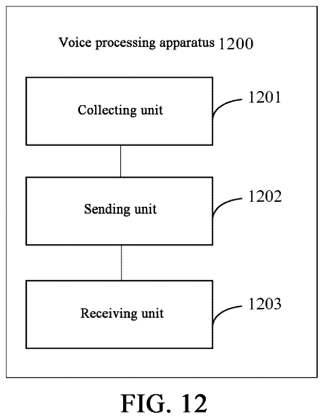

FIG. 12 illustrates another schematic diagram of a voice processing apparatus according to an embodiment of the present disclosure The voice processing apparatus may be located at a second terminal. The voice processing apparatus 1200 may comprise the following units:
a collection unit 1201 configured to collect a voice signal formed by a voice emitted by a target user to obtain a first voice signal;
a sending unit 1202 configured to, in a case of being in a connected state with a first terminal, send the first voice signal to the first terminal, the first terminal acquiring a second voice signal corresponding to the first voice signal, the second voice signal referring to a voice signal corresponding to a feedback text corresponding to a recognized text of the first voice signal;
a receiving unit 1203 configured to receive the second voice signal sent by the second terminal and play the second voice signal.

In some embodiments, the collection unit 1201 comprises:
a sound source collection module configured to collect a sound source signal;
a voice determination module configured to determine that the sound source signal is the target user's first voice signal if the sound source signal satisfies a sound recognition condition.

In some embodiments, the voice determination module is specifically configured to:
determine first direction and position information about the sound source signal, the first direction and position information referring to position information and/or direction information about the sound source of the sound source signal with respect to the second terminal; if the first direction and position information satisfies a direction and position recognition condition, determining that the sound source signal satisfies the sound recognition condition; if the first direction and position information does not satisfy the direction and position recognition condition, determining that the sound source signal does not satisfy the sound recognition condition.

In some embodiments, the voice determination module is further configured to:
acquire a historical sound signal of the target user; if the sound source signal matches the historical sound signal, determine that the sound source signal satisfies the sound recognition condition; if the sound source signal does not match the historical sound signal, determine that the sound source signal does not satisfy the sound recognition condition.

In some embodiments, the receiving unit 1203 comprises:
a voice receiving module configured to receive the second voice signal and a third voice signal sent by the second terminal;
a voice playing module configured to synchronously play the second voice signal and the third voice signal.

In some embodiments, the voice playing module comprises:
a mixing sub-module configured to mix the second voice signal and the third voice signal into a target voice signal according to a mixing rule that a volume of the second voice signal is greater than that of the third voice signal;
a playing sub-module configured to play the target voice signal.

In some embodiments, further comprising:
an instruction collection unit configured to collect a wake-up instruction initiated by the target user, and send the wake-up instruction to the first terminal, the wake-up instruction instructing the first terminal to trigger a preset target start instruction, and starting a first application associated with the target start instruction.

In some embodiments, the sending unit 1202 comprises:
a protocol conversion module configured to convert the first voice signal into a data packet according to a preset target protocol, the target protocol referring to a data protocol preset by the second terminal and the first application of the second terminal;
a data sending module configured to send the data packet to the first terminal, the data packet being parsed by the first terminal to obtain the second voice signal.

In some embodiments, the second terminal comprises a wearable device, and the first terminal comprises a mobile terminal.

In some embodiments, the wearable device comprises at least one of a headset, smart glasses, a smart watch and smart bracelets; the mobile terminal comprises at least one of a mobile phone, a notebook computer, and a tablet computer.

The apparatus or device according to the present embodiment may be used to implement the technical solutions of the above method embodiments, and the implementation principles and technical effects thereof are similar to those of the above method embodiments, and will not be described in detail any more herein.

To implement the above embodiments, an embodiment of the present disclosure further provides a computer-readable storage medium having stored therein computer-executable instructions that, when executed by a processor, implement the voice processing method as in any of the above embodiments.

In order to implement the above embodiments, an embodiment of the present disclosure further provides a computer program product comprising a computer program which, when executed by a processor, implements the voice processing method as in any of the above embodiments.

In order to implement the above embodiments, an embodiment of the present disclosure further provides an electronic device comprising: a processor and a memory;
the memory stores computer-executable instructions;
the processor executes the computer-executable instructions stored in the memory to cause the processor to implement the voice processing method as in any of the above embodiments.

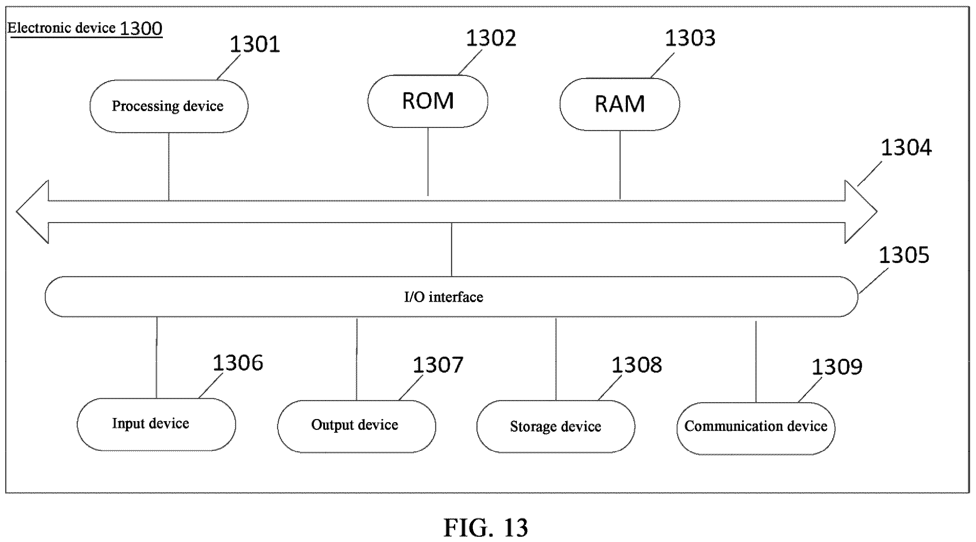

FIG. 13 shows a structural diagram of an electronic device according to an embodiment of the present disclosure. The electronic device 1300 may be a terminal device or a server. The terminal device may include, but is not limited to, mobile terminals such as a mobile phone, a laptop, a digital broadcast receiver, a Personal Digital Assistant (PDA), a Portable Android Device (PAD), a Portable Media Player (PMP), and an in-vehicle terminal (such as an in-vehicle navigation terminal) and stationary terminals such as a digital television (TV) and a desktop computer. The electronic device shown in FIG. 13 is merely an example and should not impose any limitation to the function and usage scope of the embodiments of the present disclosure.

As shown in FIG. 13, the electronic device 1300 may include a processing device (such as a central processing unit or a graphics processing unit) 1301. The processing device 1301 may perform various proper actions and processes according to a program stored in a Read-Only Memory (ROM) 1302 or a program loaded into a Random-Access Memory (RAM) 1303 from a storage device 1308. Various programs and data required for operations of the electronic device 1300 are also stored in the RAM 1303. The processing device 1301, the ROM 1302, and the RAM 1303 are connected to each other via a bus 1304. An input/output (I/O) interface 1305 is also connected to the bus 1304.

Generally, the following devices may be connected to the I/O interface 1305: an input device 1306 including, for example, a touchscreen, a touchpad, a keyboard, a mouse, a camera, a microphone, an accelerometer, and a gyroscope, an output device 1307 including, for example, a Liquid Crystal Display (LCD), a speaker, and a vibrator, the storage device 1308 including, for example, a magnetic tape and a hard disk, and a communication device 1309. The communication device 1309 may allow the electronic device 1300 to perform wireless or wired communication with other devices to exchange data. Although FIG. 13 shows the electronic device 1300 having various devices, it is to be understood that it is not required to implement or have all the shown devices. Alternatively, more or fewer devices may be implemented or present.

Particularly, according to the embodiments of the present disclosure, the process described above with reference to a flowchart may be implemented as a computer software program. For example, a computer program product is included in the embodiments of the present disclosure. The computer program product includes a computer program carried in a computer-readable medium. The computer program includes program codes for executing the method shown in the flowchart. In such embodiments, the computer program may be downloaded and installed from a network through the communication apparatus 1309, installed from the storage apparatus 1308, or installed from the ROM 1302. When the computer program is executed by the processing apparatus 1301, the preceding functions defined in the methods in the embodiments of the present disclosure are implemented.

It is to be noted that the preceding computer-readable medium in the present disclosure may be a computer-readable signal medium or a computer-readable storage medium or any combination thereof. For example, the computer-readable storage medium may be, but is not limited to, an electrical, magnetic, optical, electromagnetic, infrared, or semiconductor system, apparatus, or device or any combination thereof. Concrete examples of the computer-readable storage medium may include, but are not limited to, an electrical connection having one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical memory device, a magnetic memory device, or any suitable combination thereof. In the present disclosure, the computer-readable storage medium may be any tangible medium including or storing a program. The program may be used by an instruction execution system, apparatus, or device or used in conjunction with an instruction execution system, apparatus, or device. In the present disclosure, the computer-readable signal medium may include a data signal propagated on a baseband or as a part of a carrier, and computer-readable program codes are carried in the data signal. The data signal propagated in this manner may be in multiple forms, including, but not limited to, an electromagnetic signal, an optical signal, or any suitable combination thereof. The computer-readable signal medium may also be any computer-readable medium except the computer-readable storage medium. The computer-readable signal medium may send, propagate, or transmit a program used by an instruction execution system, apparatus, or device or used in conjunction with an instruction execution system, apparatus, or device. The program codes included on the computer-readable medium may be transmitted by any suitable medium, including, but not limited to, a wire, an optical cable, a radio frequency (RF), or any suitable combination thereof.

The above computer-readable medium may be included in the above-mentioned electronic device; or may exist alone without being assembled into the electronic device.

The above-mentioned computer-readable medium carries one or more programs which, when executed by the electron device, causes the electronic device to perform the methods shown in the above embodiments.

Computer program code for carrying out operations for aspects of the present disclosure may be written in one or more programming languages or combinations thereof, the programming languages including an object oriented programming language such as Java, Smalltalk, C++ or the like and conventional procedural programming languages, such as the "C" programming language or assembly language or similar programming languages. The program code may execute entirely on the user's computer, partly on the user's computer, as a stand-alone software package, partly on the user's computer and partly on a remote computer or entirely on the remote computer or server. In the situations involving the remote computer, the remote computer may be connected to the user's computer through any type of network, including a Local Area Network (LAN) or a Wide Area Network (WAN), or may be connected to an external computer (for example, through the Internet using an Internet Service Provider).

The flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code that contains one or more executable instructions for implementing specified logic functions. It should also be noted that, in some alternative implementations, the functions annotated in the blocks may occur out of the order noted in the figures. For example, two blocks shown in succession may, in fact, be executed substantially concurrently, or the blocks may sometimes be executed in the reverse order, depending upon the functionality involved. It is also noted that each block of the block diagrams and/or flowcharts, and combinations of blocks in the block diagrams and/or flowcharts, can be implemented in dedicated hardware-based systems that perform the specified functions or operations, or can be implemented in a combination of dedicated hardware and computer instructions.

The units involved in the embodiments of the present disclosure may be implemented in software or hardware. The names of the units do not constitute a limitation of the units themselves under certain circumstances, for example, the first acquisition unit may also be described as "a unit for acquiring at least two Internet Protocol addresses".

The functions described herein above may be performed, at least in part, by one or more hardware logic components. For example, without limitation, exemplary types of hardware logic components that may be used include: Field Programmable Gate Array (FPGA), Application Specific Integrated Circuit (ASIC), Application Specific Standard Product (ASSP), System on Chip (SOC), Complex Programmable Logic Device (CPLD) and so on.

In the context of the subject matter described herein, the machine-readable medium may be any tangible medium including or storing a program for or about an instruction executing system, apparatus or device. The machine-readable medium may be a machine-readable signal medium or machine-readable storage medium. The machine-readable medium may include, but not limited to, electronic, magnetic, optical, electro-magnetic, infrared, or semiconductor system, apparatus or device, or any appropriate combination thereof. More detailed examples of the machine-readable storage medium include, an electrical connection having one or more wires, a portable computer magnetic disk, hard drive, Random-Access Memory (RAM), Read-Only Memory (ROM), Erasable Programmable Read-Only Memory (EPROM or flash memory), optical fiber, a portable compact Disc Read-Only Memory (CD-ROM), an optical storage device, a magnetic storage device, or any suitable combination of the foregoing.

In a first aspect, according to one or more embodiments of the present disclosure, there is provided a voice processing method applied to a first terminal, the method comprising:
receiving a first voice signal sent by a second terminal when in a connected state with the second terminal, the first voice signal referring to a voice signal obtained by the second terminal by collecting a voice emitted by a target user;
obtaining a second voice signal corresponding to the first voice signal through a voice interaction model, the second voice signal referring to a voice signal generated by a feedback text corresponding to a recognized text of the first voice signal;
sending the second voice signal to the second terminal, the second voice signal being played by the second terminal.

According to one or more embodiments of the present disclosure, the obtaining a second voice signal corresponding to the first voice signal through a voice interaction model comprises:
sending the first voice signal to a server, the voice interaction model being configured in the server, and the voice interaction model being used for acquiring the feedback text corresponding to the recognized text of the first voice signal;
acquiring the second voice signal corresponding to the feedback text.

According to one or more embodiments of the present disclosure, the acquiring the second voice signal corresponding to the feedback text comprises:
receiving second voice information sent by the server, the voice interaction model being further used for converting the feedback text into the second voice signal.

According to one or more embodiments of the present disclosure, the acquiring the second voice signal corresponding to the feedback text comprises:
receiving a playback instruction sent by the server, the playback instruction referring to an instruction for starting a second application associated with the recognized text of the first voice signal and playing relevant multimedia content;
executing the playback instruction to start the second application and control the second application to play the relevant multimedia content;
determining a voice signal when the relevant multimedia content is played, as the second voice signal.

According to one or more embodiments of the present disclosure, the receiving a first voice signal sent by a second terminal comprises:
receiving the first voice signal sent by the second terminal in response to satisfying a receiving operation mode;
the sending the second voice signal to the second terminal comprises:
sending the second voice signal to the second terminal in response to satisfying a sending operation mode.

According to one or more embodiments of the present disclosure, further comprising:
receiving a first audio stream sent by the second terminal and acquiring a recognized text of the first audio stream via the voice interaction model;
determining that the receiving operation mode is satisfied if the recognized text of the first audio stream is an incomplete statement, and continuing to receive the next first audio stream sent by the second terminal device;
if the recognized text of the first audio stream is a complete statement, determining that the sending operation mode is satisfied in response to acquiring the second voice signal.

According to one or more embodiments of the present disclosure, the sending the second voice signal to the second terminal comprises:
transmitting a second audio stream of the second voice signal to the second terminal, the second audio stream being received and played by the second terminal in real time;
in a process of transmitting the second audio stream of the second voice signal, if a fourth voice signal sent by the second terminal is received, determining that the receiving operation mode is satisfied and stopping transmitting the second audio stream of the second voice signal, the fourth voice signal being obtained by collecting in a process of the second terminal receiving and playing the second audio stream of the second voice signal in real time;
taking the fourth voice signal as a new first voice signal.

According to one or more embodiments of the present disclosure, before the receiving a first voice signal collected by the second terminal, the method further comprises:
in a case of triggering a preset target start instruction, starting a first application associated with the target start instruction.

According to one or more embodiments of the present disclosure, the method further comprises:
determining to trigger the target start instruction in response to receiving a wake-up instruction sent by the second terminal; or
determining to trigger the target start instruction in response to a triggering operation performed on the first component of a first application in a first user interface.

According to one or more embodiments of the present disclosure, the receiving a first voice signal sent by a second terminal comprises:
receiving the first voice signal sent by the second terminal through the first application in a process of displaying the second user interface of a third application.

According to one or more embodiments of the present disclosure, after responding to a triggering operation performed on a first component in the first user interface, the method further comprises:
triggering the display of a third user interface corresponding to the first application;
returning to display the first user interface in response to an interface switching operation performed on the third user interface;
in response to a triggering operation performed on a second component in the first user interface, triggering the display of the second user interface corresponding to the second component, the second component referring to a component of the third application.

**00367** According to one or more embodiments of the present disclosure, the receiving a first voice signal sent by the second terminal when in a connected state with the second terminal comprises:
obtaining the first voice signal collected by the second terminal in a case of being in a lock screen state and being in a connected state with the second terminal.

According to one or more embodiments of the present disclosure, the method further comprises:
acquiring a third voice signal to be played currently by a multimedia player;
the sending the second voice signal to the second terminal comprises:
sending the second voice signal and the third voice signal to the second terminal, the second voice signal and the third voice signal being played synchronously by the second terminal.

In a second aspect, according to one or more embodiments of the present disclosure, there is provided a voice processing method applied to a second terminal, the method comprising:
collecting a target user's voice signal to obtain a first voice signal;
in a case of being in a connected state with a first terminal, sending the first voice signal to the first terminal, the first terminal acquiring a second voice signal corresponding to the first voice signal, the second voice signal referring to a voice signal corresponding to a feedback text corresponding to a recognized text of the first voice signal;
receiving the second voice signal sent by the second terminal and playing the second voice signal.

In some embodiments, the collecting a target user's voice signal to obtain a first voice signal comprises:
collecting a sound source signal;
determining that the sound source signal is the target user's first voice signal if the sound source signal satisfies a sound recognition condition.

According to one or more embodiments of the present disclosure, whether the sound source signal satisfies the sound recognition condition is determined by the following steps:
determining first direction and position information about the sound source signal, the first direction and position information referring to position information and/or direction information about a sound source of the sound source signal with respect to the second terminal;
if the first direction and position information satisfies a direction and position recognition condition, determining that the sound source signal satisfies the sound recognition condition;
if the first direction and position information does not satisfy the direction and position recognition condition, determining that the sound source signal does not satisfy the sound recognition condition.

According to one or more embodiments of the present disclosure, whether the sound source signal satisfies the sound recognition condition is determined by the following steps:
acquiring a historical sound signal of the target user;
if the sound source signal matches the historical sound signal, determining that the sound source signal satisfies the sound recognition condition;
if the sound source signal does not match the historical sound signal, determining that the sound source signal does not satisfy the sound recognition condition.

According to one or more embodiments of the present disclosure, the receiving the second voice signal sent by the second terminal and playing the second voice signal comprises:
receiving the second voice signal and a third voice signal sent by the second terminal;
synchronously playing the second voice signal and the third voice signal.

According to one or more embodiments of the present disclosure, the synchronously playing the second voice signal and the third voice signal comprises:
mixing the second voice signal and the third voice signal into a target voice signal according to a mixing rule that a volume of the second voice signal is greater than that of the third voice signal;
playing the target voice signal.

According to one or more embodiments of the present disclosure, further comprising:
collecting a wake-up instruction initiated by the target user, and sending the wake-up instruction to the first terminal, the wake-up instruction instructing the first terminal to trigger a preset target start instruction, and starting a first application associated with the target start instruction.

According to one or more embodiments of the present disclosure, the sending the first voice signal to the first terminal comprises:
converting the first voice signal into a data packet according to a preset target protocol, the target protocol referring to a data protocol preset by the second terminal and the first application of the second terminal;
sending the data packet to the first terminal, the data packet being parsed by the first terminal to obtain the second voice signal.

According to one or more embodiments of the present disclosure, the second terminal comprises a wearable device, and the first terminal comprises a mobile terminal.

According to one or more embodiments of the present disclosure, the wearable device comprises at least one of a headset, smart glasses, a smart watch and smart bracelets; the mobile terminal comprises at least one of a mobile phone, a notebook computer, and a tablet computer.

In a third aspect, according to one or more embodiments of the present disclosure, there is provided a voice processing apparatus located at a first terminal, the apparatus comprising:
a receiving unit configured to receive a first voice signal sent by a second terminal when in a connected state with the second terminal, the first voice signal referring to a voice signal obtained by the second terminal by collecting a voice emitted by a target user;
an obtaining unit configured to obtain a second voice signal corresponding to the first voice signal through a voice interaction model, the second voice signal referring to a voice signal generated by a feedback text corresponding to a recognized text of the first voice signal;
a sending unit configured to send the second voice signal to the second terminal, the second voice signal being played by the second terminal.

In a fourth aspect, according to one or more embodiments of the present disclosure, there is provided a voice processing apparatus located at a second terminal, the apparatus comprising:
a collection unit configured to collect a voice signal formed by a voice emitted by a target user to obtain a first voice signal;
a sending unit configured to, in a case of being in a connected state with a first terminal, send the first voice signal to the first terminal, the first terminal acquiring a second voice signal corresponding to the first voice signal, the second voice signal referring to a voice signal corresponding to a feedback text corresponding to a recognized text of the first voice signal;
a receiving unit configured to receive the second voice signal sent by the second terminal and play the second voice signal.

In a fifth aspect, according to one or more embodiments of the present disclosure, there is provided an electronic device comprising: at least one processor and a memory;
the memory stores computer-executable instructions;
the at least one processor executes the computer-executable instructions stored in the memory to cause the at least one processor to perform the voice processing method in the first aspect and various possible designs of the first aspect.

In a sixth aspect, according to one or more embodiments of the present disclosure, there is provided a computer-readable storage medium having stored therein computer-executable instructions that, when executed by a processor, implement the voice processing method in the first aspect and various possible designs of the first aspect.

In a seventh aspect, according to one or more embodiments of the present disclosure, there is provided a computer program product comprising a computer program which, when executed by a processor, implement the voice processing method in the first aspect and various possible designs of the first aspect.

The above description is merely a preferred embodiment of the present disclosure and an illustration of the technical principles employed. Those skilled in the art should understand that the scope of disclosure involved in the present disclosure is not limited to the technical solutions formed by the specific combination of the above-mentioned technical features, and should also cover, without departing from the above-mentioned disclosed concept, the technical solutions formed by the above-mentioned technical features or other technical solutions formed by any combination of its equivalent features. For example, a technical solution is formed by replacing the above features with the technical features disclosed in the present disclosure (but not limited to) with similar functions.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the subject matter disclosed herein or of what may be claimed, but rather as descriptions of features that may be specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable sub-combination.

Although the subject matter has been described in language specific to structural features and/or methodological actions, it should be understood that the subject matters specified in the appended claims are not limited to the specific features or actions described above. Rather, the specific features and actions described above are disclosed as example forms of implementing the claims.

## Claims

1. A voice processing method, wherein the method is applied to a first terminal, and comprises:
receiving (S201), in response to being in a connected state with a second terminal, a first voice signal sent by the second terminal, the first voice signal referring to a voice signal obtained by collecting, by the second terminal, a voice emitted by a target user;
obtaining (S202) a second voice signal corresponding to the first voice signal through a voice interaction model, the second voice signal referring to a voice signal generated by a feedback text corresponding to a recognized text of the first voice signal; and
sending (S203) the second voice signal to the second terminal, the second voice signal being played by the second terminal.

2. The method according to claim 1, wherein obtaining (S202) the second voice signal corresponding to the first voice signal through the voice interaction model comprises:
sending the first voice signal to a server, the voice interaction model being configured in the server, and the voice interaction model being used for acquiring the feedback text corresponding to the recognized text of the first voice signal; and
acquiring the second voice signal corresponding to the feedback text.

3. The method according to claim 2, wherein acquiring the second voice signal corresponding to the feedback text comprises:
receiving second voice information sent by the server, the voice interaction model being further used for converting the feedback text into the second voice signal.

4. The method according to claim 2, wherein acquiring the second voice signal corresponding to the feedback text comprises:
receiving a playback instruction sent by the server, the playback instruction referring to an instruction for starting a second application associated with the recognized text of the first voice signal and playing relevant multimedia content;
executing the playback instruction to start the second application and control the second application to play the relevant multimedia content; and
determining a voice signal of a timing of the relevant multimedia content being played, as the second voice signal.

5. The method according to claim 1, wherein receiving (S201) the first voice signal sent by the second terminal comprises:
receiving the first voice signal sent by the second terminal in response to satisfying a receiving operation mode,
sending the second voice signal to the second terminal comprises: sending the second voice signal to the second terminal in response to satisfying a sending operation mode.

6. The method according to claim 5, wherein the method further comprises:
receiving a first audio stream sent by the second terminal, and acquiring a recognized text of the first audio stream via the voice interaction model;
in response to the recognized text of the first audio stream being an incomplete statement, determining that the receiving operation mode is satisfied, and continuing to receive the next first audio stream sent by the second terminal device;
in response to the recognized text of the first audio stream being a complete statement, determining that the sending operation mode is satisfied in response to acquiring the second voice signal.

7. The method according to claim 6, wherein sending (S203) the second voice signal to the second terminal comprises:
transmitting a second audio stream of the second voice signal to the second terminal, the second audio stream being received and played by the second terminal in real time;
in a process of transmitting the second audio stream of the second voice signal, in response to a fourth voice signal sent by the second terminal being received, determining that the receiving operation mode is satisfied and stopping transmitting the second audio stream of the second voice signal, the fourth voice signal being obtained by collecting in a process of the second terminal receiving and playing the second audio stream of the second voice signal in real time; and
taking the fourth voice signal as a new first voice signal.

8. The method according to any of claims 1-7, wherein before receiving the first voice signal collected by the second terminal, the method further comprises:
in response to triggering a preset target start instruction, starting a first application associated with the target start instruction, or
receiving (S201) a first voice signal sent by the second terminal further comprises:
obtaining, in response to being in a lock screen state and being in a connected state with the second terminal, the first voice signal collected by the second terminal, or
the method further comprises:
acquiring a third voice signal to be played currently by a multimedia player,
sending the second voice signal to the second terminal comprises:
sending the second voice signal and the third voice signal to the second terminal, the second voice signal and the third voice signal being played synchronously by the second terminal.

9. The method according to claim 8, wherein the method further comprises:
determining to trigger the target start instruction in response to receiving a wake-up instruction; or
determining to trigger the target start instruction in response to a triggering operation performed on a first component of the first application in a first user interface.

10. The method according to claim 8, wherein receiving (S201) a first voice signal sent by the second terminal comprises:
receiving the first voice signal sent by the second terminal through the first application in a process of displaying the second user interface of a third application, preferably,
wherein in response to starting a first application associated with the target start instruction, the method further comprises:
triggering the display of a third user interface corresponding to the first application;
returning to display the first user interface in response to an interface switching operation performed on the third user interface;
in response to a triggering operation performed on a second component in the first user interface, triggering the display of the second user interface corresponding to the second component, the second component referring to a component of the third application.

11. A voice processing method, wherein the method is applied to a second terminal, and comprises:
obtaining (S901) a first voice signal by collecting a target user's voice signal;
in response to being in a connected state with a first terminal, sending (S902) the first voice signal to the first terminal, the first terminal acquiring a second voice signal corresponding to the first voice signal, the second voice signal referring to a voice signal corresponding to a feedback text corresponding to a recognized text of the first voice signal; and
receiving (S903) the second voice signal sent by the second terminal and playing the second voice signal.

12. The method according to claim 11, wherein obtaining (S901) the first voice signal by collecting the target user's voice signal comprises:
collecting a sound source signal; and
determining that the sound source signal is the target user's first voice signal in response to the sound source signal satisfying a sound recognition condition, or
the method further comprises:
collecting a wake-up instruction initiated by the target user, and sending the wake-up instruction to the first terminal, the wake-up instruction instructing the first terminal to trigger a preset target start instruction, and starting a first application associated with the target start instruction, or
sending (S902) the first voice signal to the first terminal comprises:
converting the first voice signal into a data packet according to a preset target protocol, the target protocol referring to a data protocol preset by the second terminal and the first application of the second terminal; and
sending the data packet to the first terminal, the data packet being parsed by the first terminal to obtain the second voice signal.

13. The method according to claim 12, wherein whether the sound source signal satisfies the sound recognition condition is determined by the following:
determining first direction and position information about the sound source signal, the first direction and position information referring to position information and/or direction information about a sound source of the sound source signal with respect to the second terminal;
in response to the first direction and position information satisfying a direction and position recognition condition, determining that the sound source signal satisfies the sound recognition condition; or
in response to the first direction and position information not satisfying the direction and position recognition condition, determining that the sound source signal does not satisfy the sound recognition condition, or
whether the sound source signal satisfies the sound recognition condition is determined by the following:
acquiring a historical sound signal of the target user;
in response to the sound source signal matching the historical sound signal, determining that the sound source signal satisfies the sound recognition condition; or
in response to the sound source signal not matching the historical sound signal, determining that the sound source signal does not satisfy the sound recognition condition.

14. The method according to claim 11, wherein receiving (S903) the second voice signal sent by the second terminal and playing the second voice signal comprises:
receiving the second voice signal and a third voice signal sent by the second terminal; and
synchronously playing the second voice signal and the third voice signal, preferably,
synchronously playing the second voice signal and the third voice signal comprises:
mixing the second voice signal and the third voice signal into a target voice signal according to a mixing rule that a volume of the second voice signal is greater than that of the third voice signal; and
playing the target voice signal.

15. An electronic device, wherein the electronic device comprises a processor and a memory; and
the processor is configured to execute instructions stored in the memory, to cause the electronic device to perform the method according to any of claims 1 to 14.

## Amended claims

### Amended claims in accordance with Rule 137(2) EPC.

1. A voice processing method, wherein the method is applied to a first terminal, **characterized by** comprising:
receiving (S201), in response to being in a connected state with a second terminal, a first voice signal sent by the second terminal, the first voice signal referring to a voice signal obtained by collecting, by the second terminal, a voice emitted by a target user;
obtaining (S202) a second voice signal corresponding to the first voice signal through a voice interaction model, the second voice signal referring to a voice signal generated by a feedback text corresponding to a recognized text of the first voice signal; and
sending (S203) the second voice signal to the second terminal, the second voice signal being played by the second terminal,
wherein sending (S203) the second voice signal to the second terminal comprises:
transmitting a second audio stream of the second voice signal to the second terminal, the second audio stream being received and played by the second terminal in real time;
in a process of transmitting the second audio stream of the second voice signal, in response to a fourth voice signal sent by the second terminal being received, determining that a receiving operation mode is satisfied and stopping transmitting the second audio stream of the second voice signal, the fourth voice signal being obtained by collecting in a process of the second terminal receiving and playing the second audio stream of the second voice signal in real time; and
taking the fourth voice signal as a new first voice signal.

2. The method according to claim 1, wherein obtaining (S202) the second voice signal corresponding to the first voice signal through the voice interaction model comprises:
sending the first voice signal to a server, the voice interaction model being configured in the server, and the voice interaction model being used for acquiring the feedback text corresponding to the recognized text of the first voice signal; and
acquiring the second voice signal corresponding to the feedback text.

3. The method according to claim 2, wherein acquiring the second voice signal corresponding to the feedback text comprises:
receiving second voice information sent by the server, the voice interaction model being further used for converting the feedback text into the second voice signal.

4. The method according to claim 2, wherein acquiring the second voice signal corresponding to the feedback text comprises:
receiving a playback instruction sent by the server, the playback instruction referring to an instruction for starting a second application associated with the recognized text of the first voice signal and playing relevant multimedia content;
executing the playback instruction to start the second application and control the second application to play the relevant multimedia content; and
determining a voice signal when the relevant multimedia content being played, as the second voice signal.

5. The method according to claim 1, wherein receiving (S201) the first voice signal sent by the second terminal comprises:
receiving the first voice signal sent by the second terminal in response to satisfying the receiving operation mode,
sending the second voice signal to the second terminal comprises:
sending the second voice signal to the second terminal in response to satisfying a sending operation mode.

6. The method according to claim 5, wherein the method further comprises:
receiving a first audio stream sent by the second terminal, and acquiring a recognized text of the first audio stream via the voice interaction model;
in response to the recognized text of the first audio stream being an incomplete statement, determining that the receiving operation mode is satisfied, and continuing to receive the next first audio stream sent by the second terminal device;
in response to the recognized text of the first audio stream being a complete statement, determining that the sending operation mode is satisfied in response to acquiring the second voice signal.

7. The method according to any of claims 1-6, wherein before receiving the first voice signal collected by the second terminal, the method further comprises:
in response to triggering a preset target start instruction, starting a first application associated with the target start instruction, or
receiving (S201) a first voice signal sent by the second terminal further comprises:
obtaining, in response to being in a lock screen state and being in a connected state with the second terminal, the first voice signal collected by the second terminal, or
the method further comprises:
acquiring a third voice signal to be played currently by a multimedia player,
sending the second voice signal to the second terminal comprises:
sending the second voice signal and the third voice signal to the second terminal, the second voice signal and the third voice signal being played synchronously by the second terminal.

8. The method according to claim 7, wherein the method further comprises:
determining to trigger the target start instruction in response to receiving a wake-up instruction; or
determining to trigger the target start instruction in response to a triggering operation performed on a first component of the first application in a first user interface.

9. The method according to claim 7, wherein receiving (S201) a first voice signal sent by the second terminal comprises:
receiving the first voice signal sent by the second terminal through the first application in a process of displaying the second user interface of a third application, preferably,
wherein in response to starting a first application associated with the target start instruction, the method further comprises:
triggering the display of a third user interface corresponding to the first application;
returning to display the first user interface in response to an interface switching operation performed on the third user interface;
in response to a triggering operation performed on a second component in the first user interface, triggering the display of the second user interface corresponding to the second component, the second component referring to a component of the third application.

10. A voice processing method, wherein the method is applied to a second terminal, and comprises:
obtaining (S901) a first voice signal by collecting a target user's voice signal;
in response to being in a connected state with a first terminal, sending (S902) the first voice signal to the first terminal, the first terminal acquiring a second voice signal corresponding to the first voice signal, the second voice signal referring to a voice signal corresponding to a feedback text corresponding to a recognized text of the first voice signal; and
receiving (S903) the second voice signal sent by the second terminal and playing the second voice signal,
wherein the second voice signal is sent by the second terminal through:
transmitting a second audio stream of the second voice signal to the second terminal, the second audio stream being received and played by the second terminal in real time;
in a process of transmitting the second audio stream of the second voice signal, in response to a fourth voice signal sent by the second terminal being received, determining that a receiving operation mode is satisfied and stopping transmitting the second audio stream of the second voice signal, the fourth voice signal being obtained by collecting in a process of the second terminal receiving and playing the second audio stream of the second voice signal in real time; and
taking the fourth voice signal as a new first voice signal.

11. The method according to claim 10, wherein obtaining (S901) the first voice signal by collecting the target user's voice signal comprises:
collecting a sound source signal; and
determining that the sound source signal is the target user's first voice signal in response to the sound source signal satisfying a sound recognition condition, or
the method further comprises:
collecting a wake-up instruction initiated by the target user, and sending the wake-up instruction to the first terminal, the wake-up instruction instructing the first terminal to trigger a preset target start instruction, and starting a first application associated with the target start instruction, or
sending (S902) the first voice signal to the first terminal comprises:
converting the first voice signal into a data packet according to a preset target protocol, the target protocol referring to a data protocol preset by the second terminal and the first application of the second terminal; and
sending the data packet to the first terminal, the data packet being parsed by the first terminal to obtain the second voice signal.

12. The method according to claim 11, wherein whether the sound source signal satisfies the sound recognition condition is determined by the following:
determining first direction and position information about the sound source signal, the first direction and position information referring to position information and/or direction information about a sound source of the sound source signal with respect to the second terminal;
in response to the first direction and position information satisfying a direction and position recognition condition, determining that the sound source signal satisfies the sound recognition condition; or
in response to the first direction and position information not satisfying the direction and position recognition condition, determining that the sound source signal does not satisfy the sound recognition condition, or
whether the sound source signal satisfies the sound recognition condition is determined by the following:
acquiring a historical sound signal of the target user;
in response to the sound source signal matching the historical sound signal, determining that the sound source signal satisfies the sound recognition condition; or
in response to the sound source signal not matching the historical sound signal, determining that the sound source signal does not satisfy the sound recognition condition.

13. The method according to claim 10, wherein receiving (S903) the second voice signal sent by the second terminal and playing the second voice signal comprises:
receiving the second voice signal and a third voice signal sent by the second terminal; and
synchronously playing the second voice signal and the third voice signal, preferably,
synchronously playing the second voice signal and the third voice signal comprises:
mixing the second voice signal and the third voice signal into a target voice signal according to a mixing rule that a volume of the second voice signal is greater than that of the third voice signal; and
playing the target voice signal.

14. An electronic device, wherein the electronic device comprises a processor and a memory; and
the processor is configured to execute instructions stored in the memory, to cause the electronic device to perform the method according to any of claims 1 to 13.
